(19) Europäisches Patentamt
European Patent Office
Office européen des brevets

(11) EP 2 746 330 B1

(12) EUROPEAN PATENT SPECIFICATION

(45) Date of publication and mention of the grant of the patent:
**19.07.2017 Bulletin 2017/29**

(21) Application number: **12834133.6**

(22) Date of filing: **21.09.2012**

(51) Int Cl.:
***C08L 9/02*** *(2006.01)* ***C08K 5/11*** *(2006.01)*
***C08L 27/06*** *(2006.01)*

(86) International application number:
**PCT/JP2012/074201**

(87) International publication number:
**WO 2013/042764 (28.03.2013 Gazette 2013/13)**

# (54) NITRILE COPOLYMER RUBBER COMPOSITION AND RUBBER CROSSLINK

NITRIL-COPOLYMER-KAUTSCHUK-ZUSAMMENSETZUNG UND KAUTSCHUKVERNETZUNG

COMPOSITION DE CAOUTCHOUC DE COPOLYMÈRE DE NITRILE ET PRODUIT DE RÉTICULATION DE CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2011 JP 2011205612**

(43) Date of publication of application:
**25.06.2014 Bulletin 2014/26**

(73) Proprietor: **Zeon Corporation**
**Tokyo 100-8246 (JP)**

(72) Inventors:
- **TSUKADA, Akira**
  **Tokyo 1008246 (JP)**
- **TAKEYAMA, Yoshihisa**
  **Tokyo 1008246 (JP)**

(74) Representative: **Adam, Holger et al**
**Kraus & Weisert**
**Patentanwälte PartGmbB**
**Thomas-Wimmer-Ring 15**
**80539 München (DE)**

(56) References cited:
**EP-A1- 1 152 029**
**EP-A2- 1 205 499**
**WO-A1-2009/096456**
**WO-A1-2011/016479**
**JP-A- H0 359 045**
**JP-A- S5 310 645**
**JP-A- H02 158 639**
**JP-A- H07 149 990**
**JP-A- S56 120 735**
**JP-A- S62 185 734**
**JP-A- 2001 072 804**
**JP-A- 2007 277 341**
**JP-A- 2011 012 132**
**JP-A- 2011 213 844**

- **DATABASE WPI Week 201048 Thomson Scientific, London, GB; AN 2010-H88117 XP002739327, & JP 2010 150375 A (NIPPON ZEON KK) 8 July 2010 (2010-07-08)**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 746 330 B1

## Description

### TECHNICAL FIELD

The present invention relates to a nitrile copolymer rubber composition which is excellent in mandrel crack resistance and can give cross-linked rubber which is excellent in gasoline permeation resistance, cold resistance, and ozone resistance.

### BACKGROUD ART

In the past, rubber which contains α,β-ethylenically unsaturated nitrile monomer units and conjugated diene monomer units (nitrile copolymer rubber) has been known as rubber which is excellent in oil resistance. It is mainly used as a material of fuel hoses, gaskets, packings, oil seals, and other rubber products which are used around various oils in automobiles.

Recently, due to the rise in global activities to protect the environment, efforts are being made to reduce the amount of evaporation of gasoline and other fuel into the atmosphere. For example, in Japan and Europe, $NO_X$ emissions are restricted. Along with this, reduction of evaporation of fuel has been sought. In Japan, much lower gasoline permeability is being sought in fuel hoses, seals, packings, and other applications. On the other hand, in the U.S., in California, the restrictions on the concentration of fuel gas in emissions have been strengthened in stages since 2004 (LEVII). In addition, in fuel hoses etc., excellent ozone resistance and cold resistance are also important requirements.

In view of this situation, Patent Document 1 proposes a vulcanizable nitrile copolymer rubber composition which contains nitrile copolymer rubber with superhigh nitrile (superhigh nitrile meaning an extremely high nitrile content of a nitrile content of 55 to 80 wt%), vinyl chloride resin, filler, plasticizer, and vulcanizer.

However, while this vulcanizable nitrile rubber composition can provide a vulcanized rubber which is excellent in gasoline permeation resistance etc., when shaping it using a mandrel, there was the problem of easy mandrel cracking.

Patent Documents 2, 3 and 4 each disclose a nitrile rubber composition obtained by compounding a plasticizer in a nitrile copolymer rubber and Patent Documents 5, 6, 7 and 8 each describe compounding a plasticizer in a nitrile rubber composition. However, these documents do not teach using a vinyl chloride resin and a plasticizer (C) of the General Formula (1) of the present invention in combination for a nitrile copolymer rubber composition.

### PRIOR ART DOCUMENTS

### PATENT DOCUMENTS

Patent Document 1: Japanese Patent Publication No. 2007-277341A
Patent Document 2: WO 2009/096456 A1
Patent Document 3: WO 2011/016479 A1
Patent Document 4: JP 2011 012132 A
Patent Document 5: JP H02 158639 A
Patent Document 6: JP S53 10645 A
Patent Document 7: JP H07 149990 A
Patent Document 8: JP S56 120735 A

### SUMMARY OF THE INVENTION

### PROBLEM TO BE SOLVED BY THE INVENTION

The present invention has as its object the provision of a nitrile copolymer rubber composition which is excellent in mandrel crack resistance and can give cross-linked rubber which is excellent in gasoline permeation resistance, cold resistance, and ozone resistance.

### MEANS FOR SOLVING THE PROBLEMS

The present inventors engaged in intensive research to achieve this object and as a result discovered that the above object is achieved by a nitrile copolymer rubber composition which contains a specific nitrile copolymer rubber, a vinyl chloride resin, and a specific plasticizer and thereby completed the present invention.

Therefore, according to the present invention, there is provided a nitrile copolymer rubber composition containing a nitrile copolymer rubber (A) which contains α,β-ethylenically unsaturated nitrile monomer units (a1) 35 to 85 wt%, conjugated diene monomer units which may be at least partially hydrogenated (a2) 15 to 65 wt%, cationic monomer units (a3) 0 to 30 wt%, and aromatic vinyl monomer units (a4) 0 to 50 wt%, the total content of the α,β-ethylenically unsaturated nitrile monomer units (a1) and the aromatic vinyl monomer units (a4) being 35 to 85 wt%,
a vinyl chloride resin (B), and
a plasticizer (C) which is expressed by the following general formula (1).

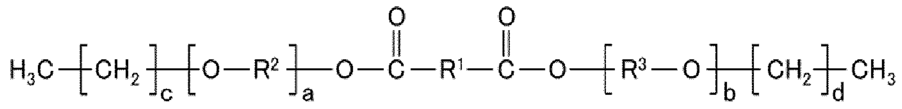

Formula (1)

(in the formula, $R^1$ is an alkylene group which has 1 to 8 carbon atoms, "a" and "b" are respectively independently integers of 3 to 11, "c" and "d" are respectively independently integers of 0 to 8, and $R^2$ and $R^3$ are respectively independently alkylene groups which have 1 to 6 carbon atoms.)

Further, the plasticizer (C) is preferably one which is expressed by the following general formula (2).

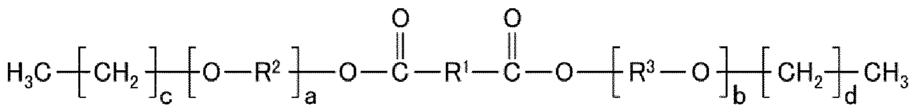

Formula (2)

(in the formula, $R^1$ is an alkylene group which has 4 carbon atoms, "a" and "b" are respectively independently integers of 4 to 5, "c" and "d" are respectively independently integers of 0 to 4, and $R^2$ and $R^3$ are respectively independently alkylene groups which have 2 carbon atoms.)

Further, in the nitrile copolymer rubber composition of the present invention, preferably a content of the vinyl chloride resin (B) is 1 to 150 parts by weight and a content of the plasticizer (C) is 1 to 200 parts by weight with respect to 100 parts by weight of the nitrile copolymer rubber (A).

Further, the ratio of content of the cationic monomer units (a3) in the nitrile copolymer rubber (A) is preferably 0.1 to 20 wt%.

Furthermore, the ratio of content of the aromatic vinyl monomer units (a4) in the nitrile copolymer rubber (A) is preferably 1 to 30 wt%.

Further, in the nitrile copolymer rubber composition of the present invention, the nitrile copolymer rubber (A) preferably contains methyl ethyl ketone insoluble in 0.5 to 90 wt%.

Further, the nitrile copolymer rubber composition of the present invention preferably further contains a layered inorganic filler (D) with an aspect ratio of 30 to 2,000 in 1 to 100 parts by weight with respect to 100 parts by weight of the nitrile copolymer rubber (A).

Further, according to the present invention, there are provided a cross-linkable nitrile rubber composition which contains the above nitrile copolymer rubber composition and a cross-linking agent and cross-linked rubber obtained by cross-linking the cross-linkable nitrile rubber composition.

Further, according to the present invention, there is provided a hose obtained by shaping the cross-linkable nitrile rubber composition which is described above into a tube, inserting a mandrel to obtain a shaped member, and cross-linking it.

## EFFECTS OF THE INVENTION

According to the present invention, there is provided a nitrile copolymer rubber composition which is excellent in mandrel crack resistance and can give cross-linked rubber which is excellent in gasoline permeation resistance, cold resistance, and ozone resistance.

## DESCRIPTION OF EMBODIMENTS

The nitrile copolymer rubber composition of the present invention contains a nitrile copolymer rubber (A) which contains α,β-ethylenically unsaturated nitrile monomer units (a1) 35 to 85 wt%, conjugated diene monomer units which may be at least partially hydrogenated (a2) 15 to 65 wt%, cationic monomer units (a3) 0 to 30 wt%, and aromatic vinyl monomer units (a4) 0 to 50 wt%, where the total content of the α,β-ethylenically unsaturated nitrile monomer units (a1) and the aromatic vinyl monomer units (a4) is 35 to 85 wt%, a vinyl chloride resin (B), and a plasticizer (C) which is

expressed by the following general formula (1).

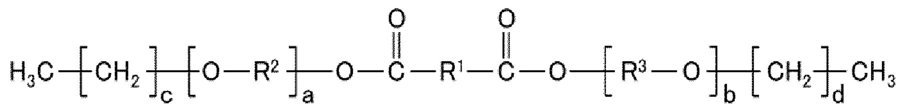

Formula (1)

(in the formula, $R^1$ is an alkylene group which has 1 to 8 carbon atoms, "a" and "b" are respectively independently integers of 3 to 11, "c" and "d" are respectively independently integers of 0 to 8, and $R^2$ and $R^3$ are respectively independently alkylene groups which have 1 to 6 carbon atoms.)

Nitrile Copolymer Rubber (A)

The nitrile copolymer rubber (A) which is used in the present invention is a nitrile copolymer rubber which contains α,β-ethylenically unsaturated nitrile monomer units (a1) 35 to 85 wt%, conjugated diene monomer units which may be at least partially hydrogenated (a2) 15 to 65 wt%, cationic monomer units (a3) 0 to 30 wt%, and aromatic vinyl monomer units (a4) 0 to 50 wt%, where the total content of the α,β-ethylenically unsaturated nitrile monomer units (a1) and the aromatic vinyl monomer units (a4) is 35 to 85 wt%.

The α,β-ethylenically unsaturated nitrile monomer which forms the α,β-ethylenically unsaturated nitrile monomer units (a1) is not particularly limited so long as an α,β-ethylenically unsaturated compound which has a nitrile group, but, for example, acrylonitrile; α-chloroacrylonitrile, α-bromoacrylonitrile, and other α-halogenoacrylonitriles; methacrylonitrile and other α-alkyl acrylonitriles; etc. may be mentioned. Among these as well, acrylonitrile and methacrylonitrile are preferable, while acrylonitrile is particularly preferable. These may be used as single type alone or as a plurality of types combined.

The ratio of content of the α,β-ethylenically unsaturated nitrile monomer units (a1) in the nitrile copolymer rubber (A) is 35 to 85 wt% with respect to the total monomer units, preferably 39 to 79 wt%, more preferably 40 to 65 wt%. If the ratio of content of the α,β-ethylenically unsaturated nitrile monomer units (a1) is too low, the obtained cross-linked rubber deteriorates in oil resistance and gasoline permeation resistance. On the other hand, if the ratio of content of the α,β-ethylenically unsaturated nitrile monomer units is too high, the obtained cross-linked rubber becomes higher in embrittlement temperature and becomes inferior in cold resistance.

The nitrile copolymer rubber (A) used in the present invention contains conjugated diene monomer units which may be at least partially hydrogenated (a2) to make the obtained cross-linked rubber one which has rubber elasticity.

Here, "at least partially hydrogenated" means containing, as conjugated diene monomer units (a2), conjugated diene monomer units with carbon-carbon unsaturated bonds which are hydrogenated.

As the conjugated diene monomer which forms the conjugated diene monomer units which may be at least partially hydrogenated (a2), a diene monomer which has 4 to 6 carbon atoms is preferable. For example, 1,3-butadiene, isoprene, 2,3-dimethyl-1,3-butadiene, 1,3-pentadiene, etc. may be mentioned. Among these as well, 1,3-butadiene is preferable. These may be used as single type alone or as a plurality of types combined.

The ratio of content of the conjugated diene monomer units which may be at least partially hydrogenated (a2) in the nitrile copolymer rubber (A) is 15 to 65 wt% with respect to the total monomer units, preferably 19.9 to 59.9 wt%, more preferably 29.7 to 54.7 wt%.

If the ratio of content of the conjugated diene monomer units which may be at least partially hydrogenated (a2) is too low, the obtained cross-linked rubber is liable to fall in rubber elasticity. On the other hand, if the ratio of content of the conjugated diene monomer units which may be at least partially hydrogenated (a2) is too large, the obtained cross-linked rubber may deteriorate in gasoline permeation resistance.

Further, the nitrile copolymer rubber (A) used in the present invention preferably contains cationic monomer units (a3). The cationic monomer units (a3) means at least one type of monomer units selected from the group comprising cation-containing monomer units and monomer units able to form cations.

The cation-containing monomer which forms the cationic monomer units (a3) is not particularly limited so long as a monomer which forms monomer units which are charged plus when the obtained polymer contacts an aqueous or acid aqueous solution. As such a cation-containing monomer, for example, a monomer which contains a quaternary ammonium salt group may be mentioned. Further, as a monomer which forms monomer units able to form cations, a monomer which has a tertiary amino group or other precursor part (substituent) which forms an ammonium salt (for example, amine hydrochloride or amine sulfate) or other cations when contacting hydrochloric acid and sulfuric acid or other acid aqueous solution may be mentioned.

As specific examples of cation-containing monomers, (meth)acryloyloxytrimethylammonium chloride (abbreviation for "methacryloyloxytrimethylammonium chloride and acryloyloxytrimethylammonium chloride", same below), (meth)acryloyloxyhydroxypropyltrimethylammonium chloride, (meth)acryloyloxytriethylammonium chloride, (meth)acryloyloxydimethylbenzylammonium chloride, (meth)acryloyloxytrimethylammonium methylsulfate, or other (meth)acrylic acid ester monomers which contain groups having quaternary ammonium salts; (meth)acrylamidepropyltrimethylammonium chloride, (meth)acrylamidepropyldimethylbenzylammonium chloride, or other (meth)acrylamide monomers which contain groups having quaternary ammonium salts; etc. may be mentioned. These may be used as single type alone or as a plurality of types combined.

As specific examples of the monomers which form the monomer units able to form cations, 2-vinyl pyridine, 4-vinyl pyridine, or other vinyl group-containing cyclic tertiary amine monomers; dimethylaminoethyl (meth)acrylate or other tertiary amino group-containing (meth)acrylic acid ester monomers; (meth)acrylamide dimethylaminoethyl, N,N-dimethylaminopropylacrylamide, or other tertiary amino group-containing (meth)acrylamide monomers; N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinyl benzyloxy)aniline, N-phenyl-4-(4-vinyl benzyloxy)aniline, etc. may be mentioned. These may be used as single type alone or as a plurality of types combined.

Among the above monomers as well, since the advantageous effect of the present invention becomes much more remarkable, a vinyl group-containing cyclic tertiary amine monomer, tertiary amino group-containing (meth)acrylic acid ester monomer, and tertiary amino group-containing (meth)acrylamide monomer are preferable, a vinyl group-containing cyclic tertiary amine monomer and tertiary amino group-containing (meth)acrylamide monomer are more preferable, and a vinyl group-containing cyclic tertiary amine monomer is furthermore preferable. Among these as well, vinyl group-containing pyridines are particularly preferable, and 2-vinyl pyridine is most preferable.

The ratio of content of the cationic monomer units (a3) is 0 to 30 wt% with respect to the total monomer units, preferably 0.1 to 20 wt%, particularly preferably 0.3 to 10 wt%. By including the cationic monomer units (a3), the obtained cross-linked rubber becomes more superior in gasoline permeation resistance.

Further, the nitrile copolymer rubber (A) used in the present invention preferably contains aromatic vinyl monomer units (a4) from the viewpoint of improvement of the gasoline permeation resistance and cold resistance of the obtained cross-linked rubber. As the aromatic vinyl monomer which forms the aromatic vinyl monomer units (a4), an aromatic vinyl compound which does not have polar groups is preferably used. As specific examples, styrene, $\alpha$-methylstyrene, 2-methylstyrene, 3-methylstyrene, 4-methylstyrene, 2,4-diisopropylstyrene, 2,4-dimethylstyrene, 4-t-butylstyrene and 5-t-butyl-2-methylstyrene, etc. may be mentioned, but since the advantageous effect of the present invention becomes much more remarkable, styrene is preferable. These may be used alone or in combinations of two or more types.

The ratio of content of the aromatic vinyl monomer units (a4) is 0 to 50 wt% with respect to the total monomer units, preferably 1 to 30 wt%, particularly preferably 5 to 30 wt%, from the viewpoint of improvement of the obtained cross-linked rubber in gasoline permeation resistance and cold resistance.

Further, the nitrile copolymer rubber (A) used in the present invention has a total content of the $\alpha,\beta$-ethylenically unsaturated nitrile monomer units (a1) and the aromatic vinyl monomer units (a4) of 35 to 85 wt% with respect to the total monomer units, preferably 40 to 80 wt%, particularly preferably 45 to 70 wt%. If the total content of the $\alpha,\beta$-ethylenically unsaturated nitrile monomer units (a1) and the aromatic vinyl monomer units (a4) is too small, the obtained cross-linked rubber deteriorates in gasoline permeation resistance, while if too great, it becomes inferior in cold resistance.

Further, the nitrile copolymer rubber (A) used in the present invention may contain, in addition to the above $\alpha,\beta$-ethylenically unsaturated nitrile monomer units (a1), conjugated diene monomer units which may be at least partially hydrogenated (a2), cationic monomer units (a3), and aromatic vinyl monomer units (a4), units of other monomer which can copolymerize with the monomers which form these monomer units. The ratio of content of such other monomer units is preferably 30 wt% or less with respect to the total monomer units, more preferably 20 wt% or less, furthermore preferably 10 wt% or less.

As such other copolymerizable monomers, for example, fluoroethylvinyl ether, fluoropropylvinyl ether, difluoroethylene, tetrafluoroethylene, and other fluorine-containing vinyl compounds; 1,4-pentadiene, 1,4-hexadiene, vinyl norbornene, dicyclopentadiene, and other unconjugated diene compounds; ethylene; propylene, 1-butene, 4-methyl-1-pentene, 1-hexene, 1-octene, and other $\alpha$-olefin compounds; acrylic acid, methacrylic acid, and other $\alpha,\beta$-ethylenically unsaturated monovalent carboxylic acids; maleic acid, maleic acid anhydride, itaconic acid, itaconic acid anhydride, fumaric acid, fumaric acid anhydride, and other $\alpha,\beta$-ethylenically unsaturated polyvalent carboxylic acids and their anhydrides; methyl (meth)acrylate, ethyl (meth)acrylate, butyl (meth)acrylate, 2-ethylhexyl (meth)acrylate, and other $\alpha,\beta$-ethylenically unsaturated monocarboxylic acid alkyl esters; monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, dibutyl itaconate, and other monoesters and diesters of $\alpha,\beta$-ethylenically unsaturated polyvalent carboxylic acids; methoxyethyl (meth)acrylate, methoxypropyl (meth)acrylate, butoxyethyl (meth)acrylate, and other alkoxyalkyl esters of $\alpha,\beta$-ethylenically unsaturated carboxylic acids; 2-hydroxyethyl (meth)acrylate, 3-hydroxypropyl (meth)acrylate, and other hydroxyalkyl esters of $\alpha,\beta$-ethylenically unsaturated carboxylic acids; divinyl benzene and other divinyl compounds; ethylene di(meth)acrylate, diethyleneglycol di(meth)acrylate, ethyleneglycol di(meth)acrylate, and other di(meth)acrylic acid esters; trimethylolpropane tri(meth)acrylate and other tri(meth)acrylic acid esters; and other polyfunctional ethylenically unsaturated monomers

and also N-methylol(meth)acrylamide, N,N'-dimethylol(meth)acrylamide, and other self cross-linkable compounds; etc. may be mentioned.

The nitrile copolymer rubber (A) has a Mooney viscosity (below, sometimes referred to as "polymer Mooney viscosity") ($ML_{1+4}$, 100°C) of preferably 3 to 250, more preferably 15 to 180, furthermore preferably 20 to 160. If the nitrile copolymer rubber (A) has a polymer Mooney viscosity which is too low, the obtained cross-linked rubber is liable to fall in strength characteristics. On the other hand, if too high, the workability may deteriorate.

The nitrile copolymer rubber (A) used in the present invention can be produced by copolymerizing the monomers which form the above-mentioned nitrile copolymer rubber (A). The method of copolymerizing the monomers is not particularly limited, but, for example, the emulsion polymerization method which is performed by using sodium dodecyl benzene sulfonate and other emulsifiers to obtain a latex of a copolymer which has an approximately 50 to 1000 nm average particle size, the suspension polymerization method which is performed by using polyvinyl alcohol or another dispersant to obtain an aqueous dispersion of a copolymer which has an approximately 0.2 to 200 $\mu$m average particle size (including microsuspension polymerization method), etc. can be preferably used. Among these as well, since control of the polymerization reaction is easy, the emulsion polymerization method is more preferable.

The emulsion polymerization method is preferably performed by the following procedure.

Note that, below, suitably, the $\alpha,\beta$-ethylenically unsaturated nitrile monomer will be referred to as the "monomer (m1)", the conjugated diene monomer as the "monomer (m2)", the monomer which forms the cationic monomer units as the "monomer (m3)", and the aromatic vinyl monomer as the "monomer (m4)".

That is, the method of emulsion polymerizing a monomer mixture comprised of the monomer (m1) 35 to 85 wt%, preferably 39 to 79 wt%, more preferably 40 to 65 wt%, the monomer (m2) 15 to 65 wt%, preferably 19.9 to 59.9 wt%, more preferably 29.7 to 54.7 wt%, the monomer (m3) 0 to 30 wt%, preferably 0.1 to 20 wt%, particularly preferably 0.3 to 10 wt%, and the monomer (m4) 0 to 50 wt%, preferably 1 to 30 wt%, particularly preferably 5 to 30 wt% (where, the total amount of the monomer (m1), monomer (m2), monomer (m3), and monomer (m4) is 100 wt%), stopping the polymerization reaction when the polymerization conversion rate is preferably 50 to 95 wt%, then removing the unreacted monomer as desired is preferable.

If the amount of use of the monomer (m1) used for the emulsion polymerization method is too small, the obtained cross-linked rubber deteriorates in oil resistance and the gasoline permeation resistance deteriorates. On the other hand, if the amount of use of the monomer (m1) is too great, the cold resistance tends to deteriorate. If the amount of use of the monomer (m2) is too small, the obtained cross-linked rubber deteriorates in cold resistance, while if the amount of use of the monomer (m2) is too great, the obtained cross-linked rubber tends to deteriorate in gasoline permeation resistance. Further, by using the monomer (m3) in the above range, the obtained cross-linked rubber can be further improved in gasoline permeation resistance. Furthermore, by using the monomer (m4) in the above range, the obtained cross-linked rubber can be improved in gasoline permeation resistance and cold resistance.

Note that, if the polymerization conversion rate where the polymerization reaction is stopped is too low, the recovery of the unreacted monomer becomes extremely difficult. On the other hand, if too high, the obtained cross-linked rubber deteriorates in normal physical properties.

At the time of emulsion polymerization, it is possible to suitably use the emulsifier, polymerization initiator, polymerization secondary materials, etc. which are conventionally known in the field of emulsion polymerization and possible to suitably adjust the polymerization temperature and the polymerization time.

Further, it is possible to use the entire amount of the monomers (m1) to (m4) which are used for emulsion polymerization to start the polymerization reaction, but from the viewpoint of controlling the distribution of composition of the monomer units of the copolymer which is produced and obtaining a cross-linked rubber which is richer in rubber elasticity, it is preferable to use part of the total amount of the monomers (m1) to (m4) which are used for emulsion polymerization to start the polymerization reaction and then add the remains of the monomers (m1) to (m4) which are used for emulsion polymerization to the reactor at a stage in the middle of the reaction to continue the polymerization reaction. This is because if reacting the total amount of the monomers (m1) to (m4) which are used for emulsion polymerization from the start of the polymerization reaction, the distribution of composition of the monomer units of the copolymer will end up becoming broader.

In this case, it is preferable to charge a monomer mixture which is comprised of the monomer (m1) which is used for polymerization in preferably 10 to 100 wt%, more preferably 20 to 100 wt%, particularly preferably 30 to 100 wt%, the monomer (m2) which is used for polymerization in preferably 5 to 90 wt%, more preferably 10 to 80 wt%, particularly preferably 15 to 70 wt%, the monomer (m3) which is used for polymerization in preferably 0 to 100 wt%, more preferably 30 to 100 wt%, particularly preferably 70 to 100 wt%, and the monomer (m4) which is used for polymerization (m4) in preferably 0 to 100 wt%, more preferably 30 to 100 wt%, particularly preferably 70 to 100 wt% in the reactor, start the polymerization reaction, then add the remaining monomers to the reactor to continue the polymerization reaction when the polymerization conversion rate with respect to the monomer mixture which is charged into the reactor is preferably 5 to 80 wt% in range. Note that, even when not using the monomer (m3), among the monomer (m1), monomer (m2), and monomer (m4) which are used for the polymerization, it is preferable to use the above-mentioned

amounts to start the polymerization reaction and then add the remains of the monomer (m1), monomer (m2), and monomer (m4) to the reactor for the polymerization. Further, even when not using the monomer (m4), among the monomer (m1), monomer (m2), and monomer (m3) which are used for the polymerization, it is preferable to use the above-mentioned amounts to start the polymerization reaction and then add the remains of the monomer (m1), monomer (m2), and monomer (m3) to the reactor for the polymerization. Furthermore, even when not using the monomer (m3) and monomer (m4), among the monomer (m1) and monomer (m2) which are used for the polymerization, it is preferable to use the above-mentioned amounts to start the polymerization reaction and then add the remains of the monomer (m1) and monomer (m2) to the reactor for the polymerization.

The method of adding the remaining monomers is not particularly limited. They may be added all at once, may be added divided, and, further, may be added continuously. In the present invention, from the viewpoint of enabling simpler control of the distribution of composition of the obtained copolymer, it is preferable to add the remaining monomers divided and is particularly preferable to add them divided into one to six batches. When adding the remaining monomers divided, the amounts of the monomers which are added divided and the timing of adding them divided may be set according to the progress in the polymerization reaction and may be adjusted so that the desired nitrile copolymer rubber (A) is obtained.

After the end of the polymerization reaction, if desired, heat distillation, vacuum distillation, steam distillation, or other known method may be used to remove the unreacted monomer and thereby obtain a latex of the nitrile copolymer rubber (A). In the present invention, the latex of the nitrile copolymer rubber (A) which is obtained by the emulsion polymerization method had a solid content concentration of preferably 5 to 70 wt%, more preferably 10 to 60 wt%, particularly preferably 15 to 50 wt%.

Note that, the nitrile copolymer rubber (A) used in the present invention may also be a hydrogenated nitrile copolymer rubber obtained by hydrogenating (hydrogen addition reaction) at least part of the conjugated diene monomer units of the copolymer which is obtained by copolymerization in the above manner. Note that, in the present invention, the conjugated diene monomer units are considered to include units having structures in which conjugated diene monomer units are hydrogenated (saturated conjugated diene monomer units).

The method of hydrogenation is not particularly limited, but a known method may be employed. When making the nitrile copolymer rubber (A) a hydrogenated nitrile rubber, its iodine value is preferably 0 to 70 in range, more preferably 4 to 60 in range. By hydrogenating the nitrile copolymer rubber (A) to obtain hydrogenated nitrile rubber, it is possible to improve the heat resistance, weather resistance, ozone resistance, etc.

<u>Methyl Ethyl Ketone (MEK) Insolubles</u>

Further, in the nitrile copolymer rubber composition of the present invention, from the viewpoint of improvement of the gasoline permeation resistance, the nitrile copolymer rubber (A) preferably contains methyl ethyl ketone (MEK) insolubles 0.5 to 90 wt%.

The methyl ethyl ketone insolubles can be found by dipping nitrile copolymer rubber (A) 1 g in 200 ml of methyl ethyl ketone, allowing it to stand at 23°C for 24 hours, then using an 80 mesh metallic mesh to filter it, evaporating the filtrate to dryness to solidify it, weighing the obtained residual dried solid content (methyl ethyl ketone solubles: (y)g), and calculating the insolubles by the following formula.

$$\text{Methyl ethyl ketone insolubles (wt\%)} = 100\times(1-y)/1$$

The methyl ethyl ketone insolubles of the nitrile copolymer rubber (A) are preferably 0.5 to 90 wt%, particularly preferably 1 to 80 wt%.

The method for adjusting the methyl ethyl ketone insolubles is not particularly limited, but (I) the method of increasing or decreasing the amount of the chain transfer agent or adjusting the polymerization temperature when copolymerizing the above monomers, (II) the method of copolymerizing divinyl benzene, ethyleneglycol dimethacrylate, trimethylolpropane trimethacrylate, and other polyfunctional ethylenically unsaturated monomers or N-methylol (meth)acrylamide, N,N'-dimethylol (meth)acrylamide, and other self cross-linkable compounds etc. when copolymerizing the above monomers, or (III) the method of adjusting the polymerization conversion rate so as to adjust the insolubles when copolymerizing the above monomers, etc. may be mentioned. These methods (I) to (III) may be used combined. Further, when hydrogenating, depending on the conditions, sometimes a small amount of methyl ethyl ketone insolubles are produced at the time of hydrogenation.

Vinyl Chloride Resin (B)

The nitrile copolymer rubber composition of the present invention contains the vinyl chloride resin (B). By containing the vinyl chloride resin (B), when made into cross-linked rubber, it is possible to make the rubber with an ozone resistance which is improved much more.

The vinyl chloride resin (B) used in the present invention has a main component monomer which forms the resin comprised of vinyl chloride and has a content of the monomer units of preferably 50 to 100 wt%, more preferably 60 to 100 wt%, particularly preferably 70 to 100 wt%.

The vinyl chloride resin (B) is preferably granular in shape. Its volume average particle size is preferably 0.01 μm to 1 mm, more preferably 0.05 to 500 μm, furthermore preferably 0.1 to 200 μm, particularly preferably 0.1 to 10 μm. The volume average particle size is measured using a laser diffraction scattering particle size measuring system.

If the vinyl chloride resin (B) is too small in volume average particle size, the cross-linked rubber is liable to fall in ozone resistance. Conversely, if too large, at the time of kneading, dispersion defects may occur.

Further, the Tg of the vinyl chloride resin (B) (glass transition temperature which is measured by a differential scan calorimeter (DSC)) is preferably 50 to 180°C, particularly preferably 60 to 150°C.

The vinyl chloride resin (B) is not particularly limited in polymerization degree, but the average polymerization degree which is measured by the solution viscosity method prescribed in JIS K6721 is preferably 400 to 3,000, more preferably 600 to 2,000. If the polymerization degree is too small, the cross-linked rubber is liable to deteriorate in ozone resistance, while conversely if too large, the shapeability will sometimes deteriorate.

The content of the vinyl chloride resin (B) is preferably 1 to 150 parts by weight with respect to 100 parts by weight of the nitrile copolymer rubber (A), more preferably 10 to 120 parts by weight, particularly preferably 20 to 100 parts by weight. If the content of the vinyl chloride resin (B) is too small, the effect of addition becomes difficult to secure. On the other hand, if too great, the cold resistance is liable to deteriorate.

Plasticizer (C)

The nitrile copolymer rubber composition of the present invention contains the plasticizer (C) which is expressed by the following general formula (1).

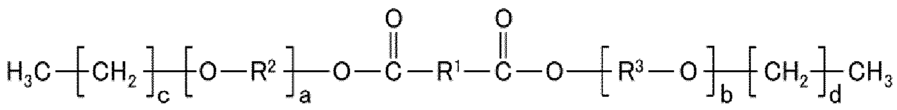 Formula (1)

(in the formula, $R^1$ is an alkylene group which has 1 to 8 carbon atoms, "a" and "b" are respectively independently integers of 3 to 11, "c" and "d" are respectively independently integers of 0 to 8, and $R^2$ and $R^3$ are respectively independently alkylene groups which have 1 to 6 carbon atoms.)

The nitrile copolymer rubber composition of the present invention is excellent in mandrel crack resistance due to the inclusion of the above plasticizer (C). Further, the obtained cross-linked rubber becomes excellent in gasoline permeation resistance, cold resistance, and ozone resistance.

Note that, since the advantageous effects of the present invention become much more remarkable, $R^1$ is preferably an alkylene group which has 3 to 6 carbon atoms, $R^2$ and $R^3$ are preferably respectively independently alkylene groups which have 1 to 4 carbon atoms, "a" and "b" are preferably respectively independently integers of 3 to 6, "c" and "d" are preferably respectively independently integers of 0 to 6, and the plasticizer (C) is particularly preferably expressed by the following general formula (2).

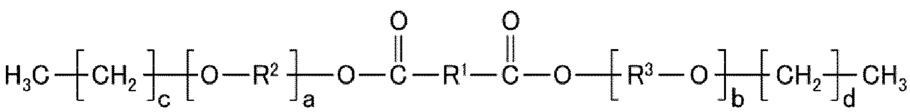 Formula (2)

(in the formula, $R^1$ is an alkylene group which has 4 carbon atoms, "a" and "b" are respectively independently integers of 4 to 5, "c" and "d" are respectively independently integers of 0 to 4, and $R^2$ and $R^3$ are respectively independently alkylene groups which have 2 carbon atoms.)

As specific examples of such a plasticizer (C), di(methoxytriethoxyethyl) adipate (compound of formula (2) where a=4, b=4, c=0, and d=0), (methoxytriethoxyethyl)(methoxytetraethoxyethyl) adipate (compound of formula (2) where a=4, b=5, c=0, and d=0), di(methoxytetraethoxyethyl) adipate (compound of formula (2) where a=5, b=5, c=0, and d=0), (butoxytriethoxyethyl) (pentoxytetraethoxyethyl) adipate (compound of formula (2) where a=4, b=5, c=3, and

d=4), (pentoxytriethoxyethyl)(pentoxytetraethoxyethyl) adipate (compound of formula (2) where a=4, b=5, c=4, and d=4), di(propoxytetraethoxyethyl) adipate (compound of formula (2) where a=5, b=5, c=2, and d=2), di(methoxytripropoxypropyl) adipate (compound of formula (1) where a=4, b=4, c=0, and d=0, $R^1$ is an alkylene group which has 4 carbon atoms, and $R^2$ and $R^3$ are alkylene groups which have 3 carbon atoms), di(heptoxytripropoxypropyl) adipate (compound of formula (1) where a=4, b=4, c=6, and d=6, $R^1$ is an alkylene group which has 4 carbon atoms, and $R^2$ and $R^3$ are alkylene groups which have 3 carbon atoms), di(ethoxytetrapentoxypentyl) adipate (compound of formula (1) where a=5, b=5, c=1, and d=1, $R^1$ is an alkylene group which has 4 carbon atoms, and $R^2$ and $R^3$ are alkylene groups which have 5 carbon atoms), or other diester compounds of adipic acid;

di(methoxytriethoxyethyl) succinate (compound of formula (1) where a=4, b=4, c=0, and d=0, $R^1$ is an alkylene group which has 2 carbon atoms, and $R^2$ and $R^3$ are alkylene groups which have 2 carbon atoms), (methoxytriethoxyethyl)(methoxytetraethoxyethyl) succinate, di(ethoxytetraethoxyethyl) succinate, (propoxytriethoxyethyl)(butoxytetraethoxyethyl) succinate, (pentoxytriethoxyethyl)(pentoxytetraethoxyethyl) succinate, di(propoxytetraethoxyethyl) succinate, di(ethoxytripropoxypropyl) succinate, di(heptoxytripropoxypropyl) succinate, di(ethoxytetrapentoxypentyl) succinate, or other diester compounds of succinic acid;

di(ethoxytriethoxyethyl) glutamate (compound of formula (1) where a=4, b=4, c=1, and d=1, $R^1$ is an alkylene group which has 3 carbon atoms, and $R^2$ and $R^3$ are alkylene groups which have 2 carbon atoms), (methoxytriethoxyethyl)(methoxytetraethoxyethyl) glutamate, di(ethoxytetraethoxyethyl) glutamate, (propoxytriethoxyethyl)(butoxytetraethoxyethyl) glutamate, (pentoxytriethoxyethyl)(pentoxytetraethoxyethyl) glutamate, di(propoxytetraethoxyethyl) glutamate, di(ethoxytripropoxypropyl) glutamate, di(heptoxytripropoxypropyl) glutamate, di(ethoxytetrapentoxypentyl) glutamate, or other diester compounds of glutamic acid;

di(propoxytriethoxyethyl) suberate (compound of formula (1) where a=4, b=4, c=2, and d=2, $R^1$ is an alkylene group which has 6 carbon atoms, and $R^2$ and $R^3$ are alkylene groups which have 2 carbon atoms), (methoxytriethoxyethyl)(methoxytetraethoxyethyl) suberate, di(ethoxytetraethoxyethyl) suberate, (propoxytriethoxyethyl)(butoxytetraethoxyethyl) suberate, (pentoxytriethoxyethyl)(pentoxytetraethoxyethyl) suberate, di(propoxytetraethoxyethyl) suberate, di(ethoxytripropoxypropyl) suberate, di(heptoxytripropoxypropyl) suberate, di(ethoxytetrapentoxypentyl) suberate, or other diester compounds of suberic acid;

di(methoxytriethoxyethyl) azelate (compound of formula (1) where a=4, b=4, c=0, and d=0, $R^1$ is an alkylene group which has 7 carbon atoms, and $R^2$ and $R^3$ are alkylene groups which have 2 carbon atoms), (methoxytriethoxyethyl)(methoxytetraethoxyethyl) azelate, di(ethoxytetraethoxyethyl) azelate, (propoxytriethoxyethyl)(butoxytetraethoxyethyl) azelate, (pentoxytriethoxyethyl)(pentoxytetraethoxyethyl) azelate, di(propoxytetraethoxyethyl) azelate, di(ethoxytripropoxypropyl) azelate, di(heptoxytripropoxypropyl) azelate, di(ethoxytetrapentoxypentyl) azelate, or other diester compounds of azealeic acid; etc. may be mentioned, but since the advantageous effects of the present invention become much more remarkable, diester compounds of adipic acid are preferable, di(methoxytriethoxyethyl) adipate, (methoxytriethoxyethyl)(methoxytetraethoxyethyl) adipate, di(methoxytetraethoxyethyl) adipate, (butoxytriethoxyethyl)(pentoxytetraethoxyethyl) adipate, and (pentoxytriethoxyethyl)(pentoxytetraethoxyethyl) adipate are particularly preferable. These may be used as single type alone or as a plurality of types combined.

The ratio of content of the plasticizer (C) in the nitrile rubber composition of the present invention is preferably 1 to 200 parts by weight with respect to 100 parts by weight of the nitrile copolymer rubber (A), more preferably 2 to 140 parts by weight, furthermore preferably 5 to 80 parts by weight, particularly preferably 15 to 80 parts by weight. If the content of the plasticizer (C) is in the above range, it is possible to prevent bleeding and further the advantageous effects of the present invention become much more remarkable.

Note that, the plasticizer (C) can be obtained by an esterification reaction of succinic acid, glutamic acid, adipic acid, suberic acid, azealeic acid, or other alkane dicarboxylic acid and methoxytriethoxy ethanol, methoxytetraethoxy ethanol, butoxytriethoxy ethanol, pentoxytetraethoxy ethanol, ethoxytripropoxy propanol, ethoxytetrapentoxy pentanol, and other alcohols which have ether bonds in the molecule by a conventionally known method.

Layered Inorganic Filler (D)

The nitrile copolymer rubber composition of the present invention preferably contains a layered inorganic filler (D) with an aspect ratio of 30 to 2,000 so as to give excellent gasoline permeation resistance and cold resistance to the obtained cross-linked rubber.

If the layered inorganic filler (D) is too small in aspect ratio, the obtained cross-linked rubber sometimes deteriorates in gasoline permeation resistance. On the other hand, if it is too large in aspect ratio, sometimes dispersion into the nitrile copolymer rubber composition becomes difficult and the cross-linked rubber ends up falling in mechanical strength. The layered inorganic filler (D) has an aspect ratio of preferably 40 to 1,000, particularly preferably 50 to 500.

The aspect ratio of the layered inorganic filler (D) can be calculated by finding the ratio of the planar average size and average thickness of the primary particles of the layered inorganic filler (D). Here, the planar average diameter and the average thickness are number average values which are obtained by measuring, using an interatomic microscope,

the diameter in the planar direction and thickness of 100 particles of inorganic filler (D) which are randomly selected and calculating the arithmetic average values.

The layered inorganic filler (D) used in the present invention is not particularly limited. It may be a naturally derived one, may be a natural one which is refined and otherwise treated, and may be a synthetic one. As specific examples, kaorinite and halloysite and other kaorinites; montmorillonite, beidellite, nontronite, saponite, hectorite, stevensite, mica, and other smectites; vermiculites; chlorites; talc; E glass or C glass and other amorphous plate-shaped particles comprised of glass flakes; etc. may be mentioned. Among these, smectites are preferable, and montmorillonite, mica, and saponite are particularly preferable. These may be used as single type alone or as a plurality of types combined. Note that, montmorillonite, mica, and saponite are multilayer structures which have exchangeable positive ions between layers, so if the above-mentioned nitrile copolymer rubber (A) has cationic monomer units, it has excellent dispersability in the nitrile copolymer rubber (A).

Here, among the above, montmorillonite is included as a main ingredient in bentonite. For this reason, as the montmorillonite, it is possible to use one obtained by refining bentonite preferably.

The volume average particle size of the layered inorganic filler (D) which was measured by a laser diffraction scattering particle size measuring system was preferably 0.1 to 80 μm, more preferably 0.1 to 60 μm, furthermore preferably 0.1 to 40 μm.

As the layered inorganic filler (D), one which is treated on its surface by at least one type of organic substance which is selected from the group of a fatty acid, fatty acid salt, fatty acid ester, resin acid, resin acid salt, and resin acid ester may be used. By using a layered inorganic filler (D) which is treated on its surface, it is possible to improve the dispersability into the nitrile copolymer rubber composition.

The ratio of content of the layered inorganic filler (D) in the nitrile rubber composition of the present invention is preferably 1 to 100 parts by weight with respect to 100 parts by weight of the nitrile copolymer rubber (A), more preferably 3 to 75 parts by weight, furthermore preferably 5 to 50 parts by weight. If the content of the layered inorganic filler (D) is in the above range, the effect of improvement of the gasoline permeation resistance and cold resistance becomes much more remarkable.

The nitrile rubber composition of the present invention may have further mixed into it, in accordance with need, a compounding agent which is used for general rubber, for example, a cross-linking retarder, reinforcing agent, a plasticizer other than the plasticizer (C), a filler other than the layered inorganic filler (D), an antiaging agent, stabilizer, lubricant, tackifier, slip agent, work aid, flame retardant, anti-fungal agent, anti-static agent, coloring agent, or other additive.

As the antiaging agent, a phenol-based, amine-based, benzimidazole-based, phosphoric acid-based, or other antiaging agent can be used. Among the phenol-based ones, 2,2'-methylenebis(4-methyl-6-t-butylphenol) etc. may be mentioned, among the amine-based ones, 4,4'-bis($\alpha$,$\alpha$-dimethylbenzyl) diphenylamine, N-isopropyl-N'-phenyl-p-phenylene diamine, etc. may be mentioned, while among the benzimidazole-based ones, 2-mercaptobenzimidazole etc. may be mentioned. These may be used as single type alone or as two or more types combined.

As a filler other than the layered inorganic filler (D), for example, carbon black, silica, calcium carbonate, aluminum silicate, magnesium silicate, calcium silicate, magnesium oxide, zinc (meth)acrylate or magnesium (meth)acrylate, and other $\alpha$,$\beta$-ethylenically unsaturated carboxylic acid metal salts etc. may be mentioned. These fillers may be treated by a silane coupling agent, titanium coupling agent, etc. for coupling treatment or may be treated by a higher fatty acid or its metal salt, ester, or amide or other higher fatty acid derivative or surfactant etc. for surface modification treatment.

Further, the nitrile rubber composition of the present invention may contain a rubber other than the nitrile copolymer rubber (A) in a range not detracting from the advantageous effects of the present invention. The rubber other than the nitrile copolymer rubber (A) is not particularly limited, but acrylic rubber, ethylene-acrylic acid copolymer rubber, fluorine rubber, styrene-butadiene copolymer rubber, ethylene-propylene copolymer rubber, ethylene-propylene-diene ternary copolymer rubber, epichlorohydrin rubber, urethane rubber, chloroprene rubber, ethylene-vinyl acetate copolymer, chlorosulfonated polyethylene, natural rubber and polyisoprene rubber etc. may be mentioned. Note that, the amount of the rubber other than the nitrile copolymer rubber (A) when blending it in is preferably 100 parts by weight or less with respect to 100 parts by weight of the nitrile copolymer rubber (A), more preferably 50 parts by weight or less, furthermore preferably 30 parts by weight or less, particularly preferably 10 parts by weight or less, since this does not detract from the excellent oil resistance or normal physical properties of the nitrile copolymer rubber (A).

Method of Production of Nitrile Copolymer Rubber Composition

The method of production of the nitrile copolymer rubber composition of the present invention is not particularly limited, but it is preferable to mix the latex of the nitrile copolymer rubber (A) which was obtained by the above-mentioned emulsion polymerization etc., the vinyl chloride resin (B) in the latex state which was produced by the conventionally known emulsion polymerization method, and an optionally used aqueous dispersion of the layered inorganic filler (D)

(latex blend), coagulate the obtained latex composition to produce crumbs, and dry the crumbs to obtain rubber composition, add to the obtained rubber composition the plasticizer (C) and in accordance with need an antiaging agent, reinforcing agent, and other ingredients, knead the mixture by rolls or a Banbury mixer or other kneader, and thereby prepare the nitrile rubber composition of the present invention.

Note that, the aqueous dispersion of the layered inorganic filler (D) may be prepared by strongly stirring ion exchanged water or another aqueous medium while adding the layered inorganic filler (D). In this case, it is sufficient to use an aqueous medium which contains, with respect to the layered inorganic filler (D), 0.1 to 80 wt%, preferably 0.1 to 10 wt% of sodium polyacrylate, sodium tripolyphosphate, sodium hexamethaphosphate, sodium pyrophosphate, sodium polymaleate, a sodium salt of a β-naphthalenesulfonic acid-formalin condensate, or other dispersant or surfactant etc. These may be used as single type alone or as a plurality of types combined. The solid content concentration of the layered inorganic filler (D) is preferably 1 to 50 wt%, more preferably 2 to 40 wt%.

Further, as the method of preparing the nitrile copolymer rubber composition of the present invention, in addition to the above-mentioned method, for example, it is possible to add into a latex of the nitrile copolymer rubber (A) all of the ingredients comprised of the vinyl chloride resin (B), the plasticizer (C), and the optionally added layered inorganic filler (D) or one or more of the ingredients in total or in part to obtain a latex composition, then coagulate and dry it and knead in the optionally added antiaging agent, reinforcing agent, and other ingredients and the remaining ingredients by rolls, a Banbury mixer, or other kneader.

The method of coagulation of the latex composition is not particularly limited. Salting out coagulation or another known method is applied. Among these as well, it is preferable to add the latex composition to an aqueous solution which contains a coagulant to cause salting out. As the coagulant, calcium chloride, sodium chloride, calcium hydroxide, aluminum sulfate, aluminum hydroxide, etc. may be mentioned. The amount of use of the coagulant is preferably 0.5 to 150 parts by weight with respect to 100 parts by weight of the nitrile copolymer rubber (A), particularly preferably 0.5 to 20 parts by weight.

Here, in the case that the nitrile copolymer rubber (A) contains cationic monomer units, when salting out the latex composition, it is preferable to add a dilute sulfuric acid aqueous solution etc. and control the pH of the coagulant aqueous solution to the isoelectric point of the latex composition of the nitrile copolymer rubber (A) or less. By controlling the pH of the coagulant aqueous solution, the zeta potential of the functional groups of the cationic monomer units which are contained in the nitrile copolymer rubber (A) rises. Due to this, the dispersability of the layered inorganic filler (D) which is added in accordance with need rises and the particle size of the crumbs which are obtained by coagulation can be made larger.

The particle size of the crumbs has a great effect on the dehydration degree at the vibrating screen and squeezer after the coagulation and washing processes, the crumb recovery rate, and the dryness in the drying process, so the crumbs have an average particle size of preferably 0.1 to 40 mm. The methods of washing, dehydrating, and drying the crumbs are similar to the washing and dehydrating methods and drying method in the production of general rubber. As the washing and dehydrating methods, a mesh type filter, centrifugal separator, etc. may be used to separate the crumbs obtained by coagulation and water, then the crumbs may be washed and dehydrated by a squeezer etc. Next, a band dryer, air circulation vertical dryer, single-screw extruder, twin-screw extruder, etc. which are generally used for production of rubber may be used to dry the crumbs to a desired water content and thereby obtain the nitrile rubber composition of the present invention. Further, in the twin-screw extruder, coagulation and drying may be simultaneously performed.

Cross-Linkable Nitrile Rubber Composition

The cross-linkable nitrile rubber composition of the present invention contains the nitrile copolymer rubber composition of the present invention and a cross-linking agent. As the cross-linking agent, a sulfur-based cross-linking agent, organic peroxide cross-linking agent, etc. may be mentioned. These may be used as single type alone or as a plurality of types combined, but use of a sulfur-based cross-linking agent is preferable.

As the sulfur-based cross-linking agent, powdered sulfur, flowers of sulfur, precipitated sulfur, colloidal sulfur, surface-treated sulfur, insoluble sulfur, and other sulfur; sulfur chloride, sulfur dichloride, morpholin disulfide, alkylphenol disulfide, dibenzothiazyl disulfide, N,N'-dithio-bis(hexahydro-2H-azenopin-2), phosphorus-containing polysulfide, high molecular weight polysulfide, and other sulfur-containing compounds; tetramethylthiuram disulfide, selenium dimethyldithiocarbamate, 2-(4'-morpholinodithio)benzothiazole, and other sulfur-donor compounds; etc. may be mentioned. These may be used as single type alone or as a plurality of types combined.

As the organic peroxide cross-linking agent, dicumyl peroxide, cumen hydroperoxide, t-butylcumyl peroxide, p-menthane hydroperoxide, di-t-butylperoxide, 1,3-bis(t-butylperoxyisopropyl)benzene, 1,4-bis(t-butylperoxyisopropyl)benzene, 1,1-di-t-butylperoxy-3,3-trimethylcyclohexane, 4,4-bis-(t-butyl-peroxy)-n-butyl valerate, 2,5-dimethyl-2,5-di-t-butylperoxyhexane, 2,5-dimethyl-2,5-di-t-butylperoxyhexine-3, 1,1-di-t-butylperoxy-3,5,5-trimethylcyclohexane, p-chlorobenzoyl peroxide, t-butylperoxyisopropyl carbonate, t-butylperoxy benzoate, etc. may be mentioned. These may be used as single type alone or as a plurality of types combined.

The content of the cross-linking agent in the cross-linkable nitrile rubber composition which is formed using the nitrile rubber composition of the present invention is not particularly limited, but is preferably 0.1 to 10 parts by weight with respect to 100 parts by weight of the nitrile copolymer rubber (A), more preferably 0.2 to 5 parts by weight.

When using the sulfur-based cross-linking agent, Zinc White, stearic acid, and other cross-linking aid; guanidine-based, aldehyde-amine-based, aldehyde-ammonia-based, thiazole-based, sulfenamide-based, thiourea-based, and other cross-linking accelerators; may be jointly used. The amounts of use of these cross-linking aids and cross-linking accelerators are not particularly limited, but are preferably 0.1 to 10 parts by weight in range with respect to 100 parts by weight of the nitrile copolymer rubber (A).

When using an organic peroxide cross-linking agent, as the cross-linking aid, trimethylolpropane trimethacrylate, divinylbenzene, ethylene dimethacrylate, triallyl isocyanulate, and other polyfunctional monomers etc. may be jointly used. The amount of use of these cross-linking aids is not particularly limited, but is preferably 0.5 to 20 parts by weight in range with respect to 100 parts by weight of the nitrile copolymer rubber (A).

Further, the cross-linkable nitrile rubber composition which is formed from the nitrile copolymer rubber composition of the present invention may have further mixed into it, in accordance with need, a compounding agent which is used for general rubber, for example, a cross-linking retarder, reinforcing agent, a plasticizer other than the plasticizer (C), a filler other than the layered inorganic filler (D), an antiaging agent, stabilizer, lubricant, tackifier, slip agent, work aid, flame retardant, anti-fungal agent, anti-static agent, coloring agent, coupling agent, or other additive.

The method of preparation of the cross-linkable nitrile rubber composition of the present invention is not particularly limited, but it is sufficient to add the cross-linking agent, cross-linking aid, and the other compounding agents to the nitrile rubber composition which is obtained by the above-mentioned method and knead it by a roll or Bambury mixer or other kneader.

Note that, in this case, the order of blending is not particularly limited, but it is sufficient to fully mix in the ingredients which are resistant to reaction and decomposition under heat, then mix in the ingredients which easy decompose under heat (cross-linking agent, cross-linking accelerator, etc.) at a temperature at which decomposition does not occur and in a short time.

The Mooney viscosity of the cross-linkable nitrile rubber composition of the present invention (below, sometimes referred to as the "compound Mooney viscosity") ($ML_{1+4}$, 100°C) is preferably 5 to 300, more preferably 10 to 250.

Cross-Linked Rubber

The cross-linked rubber of the present invention is obtained by cross-linking the above-mentioned cross-linkable nitrile rubber composition.

When cross-linking the cross-linkable nitrile rubber composition, a shaping machine corresponding to the shape of the shaped article (cross-linked rubber) being produced, for example, an extruder, injection molding machine, compressor, rolls, etc. is used to shape the composition, then a cross-linking reaction is caused to fix the shape of the cross-linked product. When performing the cross-linking, it is possible to cross-link the composition after the preliminary shaping or cross-link it simultaneously with the shaping. The shaping temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 1 hour.

Depending on the shape, size, etc., cross-linked rubber sometimes is not sufficiently cross-linked to the inside part even if the surface is cross-linked, so it may be further heated for secondary cross-linking.

The thus obtained cross-linked rubber of the present invention is a cross-linked product of nitrile rubber which not only has the properties inherent to nitrile rubber with excellent oil resistance, but also is excellent in mandrel crack resistance and excellent in gasoline permeation resistance, cold resistance, and ozone resistance.

As a result, the nitrile copolymer rubber composition, cross-linkable nitrile rubber composition, and their cross-linked products of the present invention are suitable for use in numerous fields such as fuel hoses, fuel seals, etc. and, further, can exhibit the effect of being able to reduce the load on the environment by reducing the amount of evaporation of gasoline and other fuel into the atmosphere.

The cross-linked rubber of the present invention is suitably used as a fuel hose etc. by making a hose which is comprised of one or more layers of which at least one layer is comprised of the cross-linked rubber of the present invention. In the case of a two or more layer laminate, the layer which is comprised of the cross-linked rubber of the present invention may be used for either the inside layer, intermediate layer, and outside layer. As the other layers of the laminate, nitrile rubber with a content of $\alpha,\beta$-ethylenically unsaturated nitrile monomer units of preferably 5 to 35 wt%, more preferably 18 to 30 wt% and also rubber which contains that nitrile rubber and a vinyl chloride resin or acrylic resin, a fluororubber, chloroprene rubber, hydrin rubber, chlorosulfonated polyethylene rubber, acrylic rubber, ethylene-acrylic acid copolymer, ethylene-propylene copolymer, ethylene-propylene-diene ternary copolymer, butyl rubber, isoprene rubber, natural rubber, styrene-butadiene copolymer, fluororesin, polyamide resin, polyvinyl alcohol, ethylene-vinyl acetate copolymer resin, ethylene-vinyl alcohol copolymer resin, polybutylene naphthalate, polyphenylene sulfide,

polyolefin resin, polyester resin, etc. may be mentioned. These may be used as single types alone or as a plurality of types combined.

Further, in accordance with need, to bond a layer which is comprised of the cross-linked rubber of the present invention and another layer, it is possible to include tetrabutylphosphonium benzotriazolate, tetraoctylphosphonium benzotriazolate, methyltrioctylphosphonium benzotriazolate, tetrabutylphosphonium tolyltriazolate, tetraoctylphosphonium tolyltriazolate, and other phosphonium salts, 1,8-diazabicyclo(5.4.0)undecene-7 salt (DBU salt), 1,5-diazabicyclo(4.3.0)-nonene-5 salt (DBN salt), etc. in one or both of the layer which is comprised of the cross-linked rubber of the present invention and another layer.

The method of production of a hose which includes the cross-linked rubber of the present invention having the above-mentioned configuration is not particularly limited, but it is possible to use an extruder etc. to form a tubular shape and then cross-link it so as to produce a hose. The cross-linkable nitrile rubber composition which is formed using the nitrile copolymer rubber composition of the present invention has the property of resistance to mandrel cracks, so a mandrel is preferably used for production. That is, the cross-linkable nitrile rubber composition which is formed using the nitrile copolymer rubber composition of the present invention is shaped into a tube, a mandrel is inserted into the obtained tubular shaped article to fix the shape, then the shaped article is cross-linked.

The cross-linked rubber of the present invention is suitable for packings, gaskets, O-rings, oil seals, and other seal members; oil hoses, fuel hoses, inlet hoses, gas hoses, brake hoses, refrigerant hoses, and other hoses; diaphragms; accumulator bladders; boots; etc. and is particularly suitably used for hoses. In particular, it is particularly suitably used for a hose obtained by shaping the cross-linkable nitrile rubber composition into a tube, inserting a mandrel to obtain a shaped article and cross-linking the obtained shaped article.

Note that, as the gas which is transported by the above gas hose, air, nitrogen, oxygen, hydrogen, carbon dioxide, carbon monoxide, methane, ethane, propane, dimethylether, steam, etc. may be mentioned.

## EXAMPLES

Below, examples and comparative examples will be mentioned to specifically explain the present invention. Below, unless specially indicated, the "parts" are based on weight. Note that, the tests and evaluation were conducted as follows:

### Mooney Viscosity

The nitrile copolymer rubber (including also case of "hydrogenated nitrile copolymer rubber") was measured for Mooney viscosity (polymer Mooney viscosity) ($ML_{1+4}$, 100°C) based on JIS K6300.

### Methyl Ethyl Ketone (MEK) Insolubles

The nitrile copolymer rubber (including also case of "hydrogenated nitrile copolymer rubber") 1 g was dipped in 200 ml methyl ethyl ketone, was allowed to stand at 23°C for 24 hours, then was filtered using an 80 mesh metallic mesh. The filtrate was evaporated to dryness to solidify it. The obtained residual dried solid (methyl ethyl ketone solubles: (y)g) was weighed. The following formula was used to calculate the methyl ethyl ketone insolubles.

$$\text{Methyl ethyl ketone insolubles (wt\%)} = 100 \times (1-y)/1$$

### Normal Physical Properties (Tensile Strength, Elongation, 100% Tensile Stress, Hardness)

The cross-linkable nitrile rubber composition (including also case of "cross-linkable hydrogenated nitrile rubber composition") was placed in a vertical 15 cm, horizontal 15 cm, depth 0.2 cm mold and pressurized while press-forming it at 160°C for 20 minutes to obtain sheet-shaped cross-linked rubber. The obtained sheet-shaped cross-linked rubber was used to punch out a dumbbell no. 3 shape. The test piece was used to measure tensile strength, elongation, and 100% tensile stress of the cross-linked rubber in accordance with JIS K6251. Further, it was used to measure hardness of the cross-linked rubber in accordance with JIS K6253 using a Durometer hardness tester type A.

### Gasoline Permeation Coefficient

Sheet-shaped cross-linked rubber similar to the one which was used for evaluation of the above normal physical properties was prepared. As the fuel oil, "one comprised of isooctane, toluene, and ethanol mixed in a weight ratio of

2:2:1" was used. The aluminum cup method was used to measure the gasoline permeation coefficient. Specifically, a 100 ml volume aluminum cup was filled with the above fuel oil 50 ml. The obtained sheet-shaped cross-linked rubber was placed over it to cap it, then fasteners were used to adjust the area by which the sheet-shaped cross-linked rubber separated the inside and outside of the aluminum cup to 25.50 $cm^2$. Further, the aluminum cup was allowed to stand in a 23°C constant temperature tank and was measured for weight six days and seven days after the start of measurement and the amount of gasoline permeation was calculated from the difference (weight loss) (units: g· mm/$m^2$·day).

Note that, the lower the gasoline permeation coefficient in value, the better.

Embrittlement Temperature

Using sheet-shaped cross-linked rubber similar to the one which was used for evaluation of the above normal physical properties, the embrittlement temperature was measured in accordance with JIS K6261.

The lower the embrittlement temperature, the better the cold resistance.

Ozone Resistance Test

Using sheet-shaped cross-linked rubber similar to the one which was used for evaluation of the above normal physical properties, an ozone resistance test was performed in accordance with JIS K6259 under conditions of a temperature of 40°C, an ozone concentration of 50 pphm, and 30% stretching for 72 hours. The surface condition of the sample after the test was examined to evaluate the ozone resistance. The evaluation was performed based on the following.

G (good): No cracks observed.
P (poor): Cracks observed.

Mandrel Crack Resistance

An extruder was used to extrude a cross-linkable nitrile rubber composition (including also case of "cross-linkable hydrogenated nitrile rubber composition") to an inside diameter of 4.0 mm and outside diameter of 8.0 mm to obtain a tubular shaped article. The obtained tubular shaped article of the cross-linkable nitrile rubber composition was held in a 40°C oven for 72 hours, then was taken out and allowed to stand at room temperature (meaning 23°C, same below), then the tubular shaped article was cut to a length of 3 cm to prepare a test piece. At the tip of a mandrel, two drops of a silicone-based release agent (product name "Sebasol 2200", made by Ipposha) were dropped on it, then the mandrel was inserted into the test piece. The release agent was made to uniformly spread over the inside wall of the test piece and the excess release agent was wiped off. Next, the test piece was held at 40°C for 24 hours, then was held in an oven at 150°C for 30 minutes to cross-link it. The test piece was returned to room temperature, then the mandrel was pulled out to detach the mandrel and obtain a hose test piece. The obtained hose test piece was cut in the longitudinal direction (direction of length of hose) by a cutter and the outer circumference and inside wall of the hose test piece were visually examined to evaluate the occurrence of cracks.

For evaluation, mandrels of different diameters which differ by 1.0 mm increments from 5.0 mm to 14.0 mm were inserted to three test pieces each (test pieces before insertion of mandrel) to expand the inside diameters of the test pieces. The expansion rate when a crack occurred at even one of the three test pieces was found. The larger the expansion rate at which cracks are formed, the better the mandrel crack resistance.

$$\text{Expansion rate (\%)} = [(\text{outside diameter of mandrel (mm)}) - (\text{inside diameter of test piece before insertion of mandrel (mm)})] / (\text{inside diameter of test piece before insertion of mandrel (mm)}) \times 100$$

Production Example 1 (Production of Latex of Nitrile Copolymer Rubber (A1))

To a reaction vessel, water 240 parts, acrylonitrile 75.7 parts, and sodium dodecyl benzenesulfonate (emulsifier) 2.5 parts were charged and the temperature was adjusted to 5°C. Next, the vapor phase was reduced in pressure and the inside was fully deaerated, then 1,3-butadiene 22 parts, a polymerization initiator constituted by p-menthane hydroperoxide 0.06 part, sodium ethylenediamine tetracetate 0.02 part, ferrous sulfate (7-hydrate) 0.006 part, and sodium formaldehyde sulfoxylate 0.06 part and a chain transfer agent constituted by t-dodecyl mercaptan 1 part were added to start a first stage reaction of the emulsion polymerization. After the start of the reaction, the reaction vessel was additionally

charged with 1,3-butadiene in 12 parts and 12 parts for a second stage and third stage polymerization reaction when the polymerization conversion rate with respect to the monomers charged reached 42 wt% and 60 wt%. After this, hydroxylamine sulfate 0.3 part and potassium hydroxide 0.2 part were added to make the polymerization reaction stop when the polymerization conversion rate with respect to the total monomers charged reached 75 wt%. After the reaction ended, the content of the reaction vessel was warmed to 70°C and steam distillation was used under reduced pressure to recover the unreacted monomers to obtain a latex of the nitrile copolymer rubber (A1) (solid content 24 wt%).

Part of the above latex was sampled and coagulated by a large amount of methanol, then filtered and dried to obtain the nitrile copolymer rubber (A1). The ratios of content of the monomer units which form the obtained nitrile copolymer rubber (A1) were measured for $^1$H-NMR by using FT-NMR system made by Bruker BioSpin (product name "AVANCE III 500"), whereupon they were acrylonitrile units 50 wt% and 1,3-butadiene units 50 wt%. Further, the Mooney viscosity (polymer Mooney viscosity) of the nitrile copolymer rubber (A1) was 75 and the methyl ethyl ketone (MEK) insolubles of the nitrile copolymer rubber (A1) was 0 wt%.

Production Example 2 (Production of Latex of Nitrile Copolymer Rubber (A2))

Except for changing the monomers charged in the first stage reaction of the emulsion polymerization in Production Example 1 to acrylonitrile 78 parts, styrene 10 parts, and 1,3-butadiene 11.6 parts, additionally adding to the reaction vessel 1,3-butadiene in 7 parts, 7 parts, and 7 parts for a second stage, third stage, and fourth stage polymerization reaction when the polymerization conversion rates reach 28 wt%, 47 wt%, and 60 wt%, and making the polymerization reaction stop when the polymerization conversion rate reaches 70 wt%, the same procedure was followed as in Production Example 1 to obtain a latex of the nitrile copolymer rubber (A2) (solid content concentration 23 wt%).

The ratios of content of the monomer units which form the obtained nitrile copolymer rubber (A2) were measured in the same way as in Production Example 1, whereupon they were acrylonitrile units 50 wt%, 1,3-butadiene units 40 wt%, and styrene units 10 wt%. Further, the Mooney viscosity (polymer Mooney viscosity) of the nitrile copolymer rubber (A2) was 73, while the methyl ethyl ketone (MEK) insolubles of the nitrile copolymer rubber (A2) was 0 wt%.

Production Example 3 (Production of Latex of Nitrile Copolymer Rubber (A3))

Except for changing the monomers charged in the first stage reaction of the emulsion polymerization in Production Example 1 to acrylonitrile 75.7 parts, 2-vinyl pyridine 2.2 parts, and 1,3-butadiene 22 parts, the same procedure was followed as in Production Example 1 to obtain a latex of the nitrile copolymer rubber (A3) (solid content: 24 wt%).

The ratios of content of the monomer units which form the obtained nitrile copolymer rubber (A3) were measured in the same way as Production Example 1, whereupon they were acrylonitrile units 50 wt%, 1,3-butadiene units 48 wt%, and 2-vinyl pyridine units 2 wt%. Further, the Mooney viscosity (polymer Mooney viscosity) of the nitrile copolymer rubber (A3) was 73, while the methyl ethyl ketone (MEK) insolubles of the nitrile copolymer rubber (A3) were 0 wt%.

Production Example 4 (Production of Latex of Nitrile Copolymer Rubber (A4))

Except for changing the monomers charged in the first stage reaction of the emulsion polymerization in Production Example 1 to acrylonitrile 78 parts, trimethylolpropane trimethacrylate 0.4 part, and 1,3-butadiene 21.6 parts, additionally adding to the reaction vessel 1,3-butadiene in 13.5 parts and 13 parts for a second stage and third stage polymerization reaction when the polymerization conversion rates reach 36 wt% and 53 wt%, and making the polymerization reaction stop when the polymerization conversion rate reaches 70 wt%, the same procedure was followed as in Production Example 1 to obtain a latex of the nitrile copolymer rubber (A4) (solid content concentration 22 wt%).

Part of the above latex was sampled and coagulated by a large amount of methanol, then filtered and dried to obtain the nitrile copolymer rubber (A4). The ratios of content of the monomer units which form the obtained nitrile copolymer rubber (A4) were measured for $^1$H-NMR by using FT-NMR system made by Bruker BioSpin (product name "AVANCE III 500"), whereupon they were acrylonitrile units 50 wt% and 1,3-butadiene units: 50 wt%. Further, the nitrile copolymer rubber (A4) had methyl ethyl ketone (MEK) insolubles of 72 wt%.

Production Example 5 (Production of Latex of Nitrile Copolymer Rubber (A5))

Except for changing the monomers charged in the first stage reaction of the emulsion polymerization in Production Example 1 to acrylonitrile 75 parts, styrene 17 parts, trimethylolpropane trimethacrylate 0.4 part, and 1,3-butadiene 7.6 parts, additionally adding to the reaction vessel 1,3-butadiene in 9 parts and 9 parts for a second stage and third stage polymerization reaction when the polymerization conversion rates reach 45 wt% and 60 wt%, and making the polymerization reaction stop when the polymerization conversion rate reaches 70 wt%, the same procedure was followed as in Production Example 1 to obtain a latex of the nitrile copolymer rubber (A5) (solid content concentration

23 wt%).

The ratios of content of the monomer units which form the obtained nitrile copolymer rubber (A5) were measured in the same way as in the Production Example 4, whereupon they were acrylonitrile units 50 wt%, 1,3-butadiene units 30 wt%, and styrene units 20 wt%. Further, the methyl ethyl ketone (MEK) insolubles of the nitrile copolymer rubber (A5) were 72 wt%.

Production Example 6 (Production of Nitrile Copolymer Rubber (A6))

Except for changing the monomers charged in the first stage reaction of the emulsion polymerization in Production Example 1 to acrylonitrile 77.2 parts, styrene 9.8 parts, trimethylolpropane trimethacrylate 0.4 part, 1,3-butadiene 10.3 parts, and 2-vinyl pyridine 2.3 parts, additionally adding to the reaction vessel 1,3-butadiene in 7 parts, 7 parts, and 7 parts for a second stage, third stage, and fourth stage polymerization reaction when the polymerization conversion rates reach 28 wt%, 47 wt%, and 60 wt%, and making the polymerization reaction stop when the polymerization conversion rate reaches 70 wt%, the same procedure was followed as in Production Example 1 to obtain a latex of the nitrile copolymer rubber (A6) (solid content concentration 23 wt%).

The ratios of content of the monomer units which form the obtained nitrile copolymer rubber (A6) were measured in the same way as in the Production Example 4, whereupon they were acrylonitrile units 50 wt%, 1,3-butadiene units 38 wt%, styrene units 10 wt%, and 2-vinyl pyridine units 2 wt%. Further, the methyl ethyl ketone (MEK) insolubles of the nitrile copolymer rubber (A6) were 71 wt%.

Production Example 7 (Production of Latex of Nitrile Copolymer Rubber (A7))

Except for changing the monomers charged in the first stage reaction of the emulsion polymerization in Production Example 1 to acrylonitrile 23.2 parts and 1,3-butadiene 74 parts, additionally adding to the reaction vessel acrylonitrile in 4 parts and 2.8 parts for a second stage and third stage polymerization reaction when the polymerization conversion rates reach 38 wt% and 60 wt%, and making the polymerization reaction stop when the polymerization conversion rate reaches 75 wt%, the same procedure was followed as in Production Example 1 to obtain a latex of the nitrile copolymer rubber (A7) (solid content 24 wt%).

The ratios of content of the monomer units which form the obtained nitrile copolymer rubber (A7) were measured in the same way as in the Production Example 1, whereupon they were acrylonitrile units 30 wt% and 1,3-butadiene units 70 wt%. Further, the Mooney viscosity (polymer Mooney viscosity) of the nitrile copolymer rubber (A7) was 69, while the methyl ethyl ketone (MEK) insolubles of the nitrile copolymer rubber (A7) was 0 wt%.

Production Example 8 (Production of Latex of Hydrogenated Nitrile Copolymer Rubber (A8))

Using a latex of the nitrile copolymer rubber (A1) which was obtained in Production Example 1 and adding to the reactor a palladium catalyst (mixed solution of 1 wt% palladium acetate acetone solution and equivalent weight of ion exchanged water) so as to give a palladium content of 1000 ppm with respect to the weight of dried rubber which is contained in the latex, a hydrogenation reaction was performed at a hydrogen pressure of 3 MPa and a temperature of 50°C for 6 hours to obtain a latex of the hydrogenated nitrile copolymer rubber (A8).

The ratios of content of the monomer units which form the obtained hydrogenated nitrile copolymer rubber (A8) were measured in the same way as Production Example 1, whereupon they were acrylonitrile monomer units 50 wt% and 1,3-butadiene units 50 wt% (including also hydrogenated parts). Further, the Mooney viscosity (polymer Mooney viscosity) of the hydrogenated nitrile copolymer rubber (A8) was 155, the iodine value was 20, and the methyl ethyl ketone (MEK) insolubles were 4 wt%.

Production Example 9 (Production of Latex of Vinyl Chloride Resin)

To a pressure resistant reaction vessel, water 120 parts, sodium laurylsulfate 0.8 part, and potassium persulfate 0.06 part were charged. The vessel was reduced in pressure and degassed repeatedly two times, then was charged with vinyl chloride 100 parts. The mixture was stirred while warming it at 47°C for emulsion polymerization. After the polymerization conversion rate reached 90%, the mixture was cooled to room temperature to remove the unreacted monomers. The obtained vinyl chloride resin latex had a concentration of 41 wt%. The average particle size of the vinyl chloride resin was 0.3 μm, the average polymerization degree by JIS K6721 was 1,300, and the glass transition temperature was 80°C.

Example 1

The latex of the nitrile copolymer rubber (A1) which was obtained in Production Example 1 was stirred in the vessel while adding and mixing, converted to solid content, 65 parts of the latex of the vinyl chloride resin which was obtained in Production Example 9 with respect to 100 parts of solid content of the latex of the nitrile copolymer rubber (A1) (amount of nitrile copolymer rubber), to obtain a latex composition of the nitrile copolymer rubber. Further, the obtained latex composition of the nitrile copolymer rubber was poured while stirring into an aqueous solution which contains calcium chloride (coagulant) in an amount of 4 wt% with respect to the amount of the nitrile copolymer rubber (A1) in the latex composition while suitably adding 10% dilute sulfuric acid to adjust the pH so as to give a pH of the aqueous solution during solidification of 2 to produce crumbs which are comprised of nitrile copolymer rubber (A1) and vinyl chloride resin.

Further, the obtained crumbs were separated by filtration and rinsed, then were dried in vacuo at 60°C. Next, a Banbury mixer was used to mix the above dried crumbs and a stabilizer (product name "Alcamizer", made by Kyowa Chemical) 2 parts until the temperature became 180°C. Further, this mixture was transferred to rolls to cool it, then a Banbury mixer was again used to add a plasticizer constituted by di(methoxytriethoxyethyl) adipate (compound of the formula (2) where a=4, b=4, c=0, and d=0) 60 parts, MT carbon black (product name "Thermax Medium Thermal Carbon Black N990", made by CANCARB) 35 parts, cross-linking aid constituted by zinc white 7 parts, and stearic acid 1.5 parts with respect to 100 parts of the nitrile copolymer rubber (A1) and mix them at 50°C. Further, this mixture was transferred to rolls where a cross-linking agent constituted by 325 mesh sulfur 0.8 part and tetramethylthiuram disulfide (product name "Noccelar TT", made by Ouchi Shinko Chemical Industrial) 2.5 parts and N-cyclohexyl-2-benzothiazolylsulfenamide (product name "Noccelar CZ", made by Ouchi Shinko Chemical Industrial, cross-linking accelerator) 2.5 parts were added and kneaded at 50°C to prepare a cross-linkable nitrile rubber composition.

The obtained cross-linkable nitrile rubber composition was cross-linked to obtain cross-linked rubber. This was evaluated for normal physical properties (tensile strength, elongation, 100% tensile stress, hardness), gasoline permeation coefficient, embrittlement temperature, ozone resistance, and mandrel crack resistance. The results are shown in Table 1.

Examples 2 to 6

Except for using, instead of the nitrile copolymer rubber (A1), the nitrile copolymer rubber (A2) which was obtained in Production Example 2 (Example 2), the nitrile copolymer rubber (A3) which was obtained in Production Example 3 (Example 3), the nitrile copolymer rubber (A4) which was obtained in Production Example 4 (Example 4), the nitrile copolymer rubber (A5) which was obtained in Production Example 5 (Example 5), and the nitrile copolymer rubber (A6) which was obtained in Production Example 6 (Example 6), the same procedure was followed as in Example 1 to prepare a cross-linkable nitrile rubber composition and evaluate it. The results are shown in Table 1.

Example 7

A layered inorganic filler constituted by refined bentonite (product name "Bengel HV", made by Hojun, aspect ratio: 295): 100 parts was added to distilled water 1995 parts in the presence of sodium polyacrylate 5 parts and strongly stirred to obtain a solid content concentration 5% layered inorganic filler aqueous dispersion.

Further, the latex of the nitrile copolymer rubber (A3) which was obtained at Production Example 3 was stirred in the container while adding and mixing an aqueous dispersion of the latex of the vinyl chloride resin which was obtained in Production Example 9 (vinyl chloride resin 65 parts) and the layered inorganic filler aqueous dispersion which was prepared above (layered inorganic filler 20 parts) with respect to 100 parts of solid content of the latex of the nitrile copolymer rubber (A3) (amount of nitrile copolymer rubber) to obtain a nitrile copolymer rubber latex composition. Further, the obtained nitrile copolymer rubber latex composition was poured in an aqueous solution which contains calcium chloride (coagulant) in an amount of 4 wt% with respect to the amount of the nitrile copolymer rubber (A3) in the latex composition while suitably adding 10% dilute sulfuric acid to adjust the pH so as to give a pH of the aqueous solution during solidification of 2 to produce crumbs comprised of the nitrile copolymer rubber (A3), vinyl chloride resin, and layered inorganic filler.

Further, the obtained crumbs were separated by filtration and rinsed, then were dried in vacuo at 60°C. Next, a Banbury mixer was used to mix the above dried crumbs and a stabilizer (product name "Alcamizer", made by Kyowa Chemical) 2 parts until the temperature became 180°C. Further, this mixture was transferred to rolls to cool it, then a Banbury mixer was again used to add a plasticizer constituted by di(methoxytriethoxyethyl) adipate (compound of formula (2) where a=4, b=4, c=0, and d=0) 60 parts, MT carbon black (product name "Thermax Medium Thermal Carbon Black N990", made by CANCARB) 35 parts, a coupling agent constituted by β-(3,4-epoxycyclohexyl)ethyltrimethoxysilane 0.5 part, a glycol compound constituted by polyethyleneglycol (product name: Polyethyleneglycol 4,000, made by Wako

Pure Chemicals Industries, average molecular weight 3,000) 1.5 parts, a cross-linking aid constituted by zinc white 7 parts, and stearic acid 1.5 parts with respect to 100 parts of the nitrile copolymer rubber (A3) and mix them at 50°C. Further, this mixture was transferred to rolls where a cross-linking agent constituted by 325 mesh sulfur 0.8 part and tetramethylthiuram disulfide (product name "Noccelar TT", made by Ouchi Shinko Chemical Industrial) 2.5 parts and N-cyclohexyl-2-benzothiazolylsulfenamide (product name "Noccelar CZ", made by Ouchi Shinko Chemical Industrial, cross-linking accelerator) 2.5 parts were added and kneaded at 50°C to prepare a cross-linkable nitrile rubber composition.

Except for using the obtained cross-linkable nitrile rubber composition, the same procedure was followed as in Example 1 so as to evaluate it. The results are shown in Table 1.

Examples 8 to 11

Except for using, as the plasticizer, instead of di(methoxytriethoxyethyl) adipate (compound of formula (2) where a=4, b=4, c=0, and d=0) 60 parts, respectively (methoxytriethoxyethyl)(methoxytetraethoxyethyl) adipate (compound of formula (2) where a=4, b=5, c=0, and d=0) 60 parts (Example 8), di(methoxytetraethoxyethyl) adipate (compound of formula (2) where a=5, b=5, c=0, and d=0) 60 parts (Example 9), (butoxytriethoxyethyl)(pentoxytetraethoxyethyl) adipate (compound of formula (2) where a=4, b=5, c=3, and d=4) 60 parts (Example 10), and (pentoxytriethoxyethyl)(pentoxytetraethoxyethyl) adipate (compound of formula (2) where a=4, b=5, c=4, and d=4) 60 parts (Example 11), the same procedure was followed as in Example 1 to prepare a cross-linkable nitrile rubber composition and the same procedure was followed so as to evaluate it. The results are shown in Table 1.

Example 12

Except for using, as the plasticizer, instead of di(methoxytriethoxyethyl) adipate (compound of formula (2) where a=4, b=4, c=0, and d=0) 60 parts, (methoxytriethoxyethyl)(methoxytetraethoxyethyl) adipate (compound of formula (2) where a=4, b=5, c=0, and d=0) 35 parts and di(butoxyethoxyethyl) adipate (plasticizer not falling under formula (1)) 25 parts, the same procedure was followed as in Example 1 to prepare a cross-linkable nitrile rubber composition and the same procedure was followed so as to evaluate it. The results are shown in Table 1.

Comparative Examples 1 to 2

Except for using, as the plasticizer, instead of di(methoxytriethoxyethyl) adipate (compound of formula (2) where a=4, b=4, c=0, and d=0) 60 parts, respectively di(butoxyethoxyethyl) adipate 60 parts (Comparative Example 1) and di-2-ethylhexyl phthalate 60 parts (Comparative Example 2), the same procedure was followed as in Example 1 to prepare cross-linkable nitrile rubber compositions and the same procedure was followed so as to evaluate them. The results are shown in Table 1.

Note that, di(butoxyethoxyethyl) adipate is comprised of formula (1) wherein $R^1$ is an alkylene group which has 4 carbon atoms, $R^2$ and $R^3$ are alkylene groups which have 2 carbon atoms, and a=2, b=2, c=3, and d=3, so does not fall under a plasticizer (C) of formula (1). Further, di-2-ethylhexyl phthalate also has a phenylene group which has 6 carbon atoms as a group corresponding to $R^1$ of formula (1) and does not fall under the plasticizer (C) which is expressed by formula (1).

Comparative Example 3

Except not using the plasticizer constituted by di(methoxytriethoxyethyl) adipate (compound of formula (2) where a=4, b=4, c=0, and d=0), the same procedure was followed as in Example 1 to prepare a cross-linkable nitrile rubber composition and the same procedure was followed so as to evaluate it. The results are shown in Table 1.

Comparative Example 4

Except for using, instead of the nitrile copolymer rubber (A1), the nitrile copolymer rubber (A7) which was obtained in Production Example 7, the same procedure was followed as in Example 1 to prepare a cross-linkable nitrile rubber composition and the same procedure was followed so as to evaluate it. The results are shown in Table 1.

Example 13

Except for using, instead of the nitrile copolymer rubber (A1), the hydrogenated nitrile copolymer rubber (A8) which was obtained in Production Example 8, the same procedure was followed as in Example 1 to prepare a cross-linkable nitrile rubber composition and the same procedure was followed so as to evaluate it. The results are shown in

Table 2.

Comparative Example 5

Except for using, as the plasticizer, instead of di(methoxytriethoxyethyl) adipate (compound of formula (2) where a=4, b=4, c=0, and d=0) 60 parts, di(butoxyethoxyethyl) adipate (plasticizer not falling under formula (1)) 60 parts, the same procedure was followed as in Example 13 to prepare a cross-linkable nitrile rubber composition and the same procedure was followed so as to evaluate it. The results are shown in Table 2.
Table 1

Table 1

| | | | | Example | | | | | | | | | | | | Comp. ex. | | | |
|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 1 | 2 | 3 | 4 |
| Nitrile copolymer rubber | | | | A1 | A2 | A3 | A4 | A5 | A6 | A3 | A1 | A1 | A1 | A1 | A1 | A1 | A1 | A1 | A7 |
| | Composition | Acrylonitrile units (a1) | (wt%) | 50 | 50 | 50 | 50 | 50 | 50 | 50 | 50 | 50 | 50 | 50 | 50 | 50 | 50 | 50 | 30 |
| | | 1,3-butadiene units (a2) | (wt%) | 50 | 40 | 48 | 50 | 30 | 38 | 48 | 50 | 50 | 50 | 50 | 50 | 50 | 50 | 50 | 70 |
| | | 2-vinyl pyridine units (a3) | (wt%) | - | - | 2 | - | - | 2 | 2 | - | - | - | - | - | - | - | - | - |
| | | Styrene units (a4) | (wt%) | - | 10 | - | - | 20 | 10 | - | - | - | - | - | - | - | - | - | - |
| | MEK insolubles | | (wt%) | 0 | 0 | 0 | 72 | 72 | 71 | 0 | 0 | 0 | 0 | 0 | 0 | 0 | 0 | 0 | 0 |
| Plasticizer of formula (1) (including ones falling under formula (2)) | | | | | | | | | | | | | | | | | | | |
| | Composition | $R^1$ | | 4 | 4 | 4 | 4 | 4 | 4 | 4 | 4 | 4 | 4 | 4 | 4 | - | - | - | 4 |
| | | a | | 4 | 4 | 4 | 4 | 4 | 4 | 4 | 4 | 5 | 4 | 4 | 4 | - | - | - | 4 |
| | | b | | 4 | 4 | 4 | 4 | 4 | 4 | 4 | 5 | 5 | 5 | 5 | 5 | - | - | - | 4 |
| | | c | | 0 | 0 | 0 | 0 | 0 | 0 | 0 | 0 | 0 | 3 | 4 | 0 | - | - | - | 0 |
| | | d | | 0 | 0 | 0 | 0 | 0 | 0 | 0 | 0 | 0 | 4 | 4 | 0 | - | - | - | 0 |
| | | $R^2$ | | 2 | 2 | 2 | 2 | 2 | 2 | 2 | 2 | 2 | 2 | 2 | 2 | - | - | - | 2 |
| | | $R^3$ | | 2 | 2 | 2 | 2 | 2 | 2 | 2 | 2 | 2 | 2 | 2 | 2 | - | - | - | 2 |

(continued)

| Formulation of nitrile copolymer rubber composition | | | | | | | | | | | | | | | | | | |
|---|---|---|---|---|---|---|---|---|---|---|---|---|---|---|---|---|---|---|
| | Nitrile copolymer rubber | (part) | 100 | 100 | 100 | 100 | 100 | 100 | 100 | 100 | 100 | 100 | 100 | 100 | 100 | 100 | 100 | 100 |
| | Vinyl chloride resin | (part) | 65 | 65 | 65 | 65 | 65 | 65 | 65 | 65 | 65 | 65 | 65 | 65 | 65 | 65 | 65 | 65 |
| Plasticizer | Plasticizer of formula (1) | (part) | 60 | 60 | 60 | 60 | 60 | 60 | 60 | 60 | 60 | 60 | 60 | 35 | - | - | - | 60 |
| | Di(butoxyethoxyethyl) adipate | (part) | - | - | - | - | - | - | - | - | - | - | - | 25 | 60 | - | - | - |
| | Di(2-ethylhexyl) phthalate | (part) | - | - | - | - | - | - | - | - | - | - | - | - | - | 60 | - | - |
| | Layered inorganic filler | (part) | - | - | - | - | - | - | 20 | - | - | - | - | - | - | - | - | - |
| Tensile strength (MPa) | | | 13.6 | 16.2 | 14.1 | 15.6 | 15.8 | 16.4 | 17.2 | 13.6 | 13.8 | 14.4 | 14.6 | 13.2 | 12.7 | 11.6 | 16.3 | 13.5 |
| Elongation (%) | | | 500 | 470 | 490 | 470 | 440 | 460 | 400 | 510 | 500 | 490 | 470 | 490 | 510 | 470 | 330 | 510 |
| 100% tensile stress (MPa) | | | 2.2 | 2.4 | 2.3 | 2.3 | 2.7 | 2.5 | 2.7 | 2.2 | 2.3 | 2.4 | 2.4 | 2.1 | 1.8 | 2.4 | 6.8 | 1.3 |
| Hardness (Duro-A) | | | 60 | 65 | 61 | 62 | 69 | 66 | 69 | 59 | 60 | 61 | 61 | 60 | 59 | 62 | 78 | 52 |
| Gasoline permeation coefficient (g·mm/$m^2$·day) | | | 158 | 116 | 154 | 143 | 103 | 110 | 108 | 160 | 162 | 161 | 171 | 150 | 138 | 137 | 135 | 453 |
| Embrittlement temperature (°C) | | | -27 | -26 | -27 | -25 | -22 | -25 | -24 | -26 | -26 | -25 | -25 | -29 | -30 | -21 | -7 | -45 |
| Ozone resistance | | | G | G | G | G | G | G | G | G | G | G | G | G | G | G | G | G |
| Mandrel crack resistance (%) | | | 250< | 250< | 250< | 225 | 200 | 200 | 225 | 250< | 250< | 250< | 250< | 225 | 150 | 150 | 100 | 200 |

(Note) In the table, "250<" vindicates an expansion rate (mandrel crack resistance) of 250% or more.

Table 2

Table 2

| | | | | Example | Comp. ex. |
|---|---|---|---|---|---|
| | | | | 13 | 5 |
| Hydrogenated nitrile copolymer rubber | | | | A8 | A8 |
| | Composition | Acrylonitrile units (a1) | (wt%) | 50 | 50 |
| | | 1,3-butadiene units (a2) | (wt%) | 50 | 50 |
| | | 2-vinyl pyridine units (a3) | (wt%) | - | - |
| | | Styrene units (a4) | (wt%) | - | - |
| | MEK insolubles | | (wt%) | 4 | 4 |
| | Iodine value | | | 20 | 20 |
| Plasticizer of formula (1) (including ones falling under formula (2)) | | | | | |
| | Composition | $R^1$ | | 4 | - |
| | | a | | 4 | - |
| | | b | | 4 | - |
| | | c | | 0 | - |
| | | d | | 0 | - |
| | | $R^2$ | | 2 | - |
| | | $R^3$ | | 2 | - |
| Formulation of nitrile copolymer rubber composition | | | | | |
| | | Hydrogenated nitrile copolymer rubber | (part) | 100 | 100 |
| | | Vinyl chloride resin | (part) | 65 | 65 |
| | Plasticizer | Plasticizer of formula (1) | (part) | 60 | - |
| | | Di(butoxyethoxyethyl) adipate | (part) | - | 60 |
| | | Di(2-ethylhexyl) phthalate | (part) | - | - |
| | | Layered inorganic filler | (part) | - | - |
| Tensile strength (MPa) | | | | 19.8 | 18.3 |
| Elongation(%) | | | | 550 | 560 |
| 100% tensile stress (MPa) | | | | 3.4 | 2.9 |
| Hardness (Duro-A) | | | | 63 | 62 |
| Gasoline permeation coefficient (g·mm/m$^2$·day) | | | | 171 | 153 |
| Embrittlement temperature (°C) | | | | -40 | -44 |
| Ozone resistance | | | | G | G |
| Mandrel crack resistance (%) | | | | 250< | 150 |
| (Note) In the table, "250<" indicates an expansion rate (mandrel crack resistance) of 250% or more. | | | | | |

From Tables 1 and 2, when using a nitrile copolymer rubber composition which satisfies the requirements of the present invention, it is possible to obtain excellent mandrel crack resistance and give cross-linked rubber which is excellent in gasoline permeation resistance, cold resistance, normal state properties, and ozone resistance (Examples 1 to 13).

As opposed to this, when using a nitrile copolymer rubber composition which uses a plasticizer which does not fall under formula (1) and therefore does not satisfy the requirements of the present invention, it becomes inferior in

mandrel crack resistance (Comparative Examples 1 and 2).

Further, when using a nitrile copolymer rubber composition which does not use a plasticizer, so does not satisfy the requirements of the present invention, it becomes inferior in cold resistance and mandrel crack resistance as a result (Comparative Example 3).

Further, when using nitrile copolymer rubber with a total content of the α,β-ethylenically unsaturated nitrile monomer units (a1) and the aromatic vinyl monomer units (a2) which is too small and therefore does not satisfy the requirements of the present invention, it becomes inferior in gasoline permeation resistance as a result (Comparative Example 4).

Further, in the case using hydrogenated nitrile copolymer rubber, when using a plasticizer which does not fall under formula (1) and therefore not satisfying the requirements of the present invention, it becomes inferior in mandrel crack resistance as a result (Comparative Example 5).

## Claims

1. A nitrile copolymer rubber composition containing
a nitrile copolymer rubber (A) which contains α,β-ethylenically unsaturated nitrile monomer units (a1) 35 to 85 wt%, conjugated diene monomer units which may be at least partially hydrogenated (a2) 15 to 65 wt%, cationic monomer units (a3) 0 to 30 wt%, and aromatic vinyl monomer units (a4) 0 to 50 wt%, the total content of said α,β-ethylenically unsaturated nitrile monomer units (a1) and said aromatic vinyl monomer units (a4) being 35 to 85 wt%,
a vinyl chloride resin (B), and
a plasticizer (C) which is expressed by the following general formula (1).

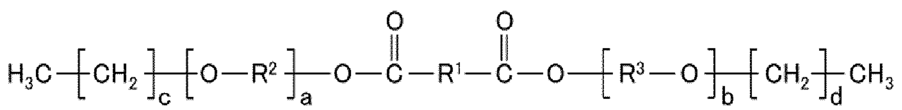

Formula (1)

(in the formula, $R^1$ is an alkylene group which has 1 to 8 carbon atoms, "a" and "b" are respectively independently integers of 3 to 11, "c" and "d" are respectively independently integers of 0 to 8, and $R^2$ and $R^3$ are respectively independently alkylene groups which have 1 to 6 carbon atoms.)

2. The nitrile copolymer rubber composition as set forth in claim 1, wherein said plasticizer (C) is one which is expressed by the following general formula (2).

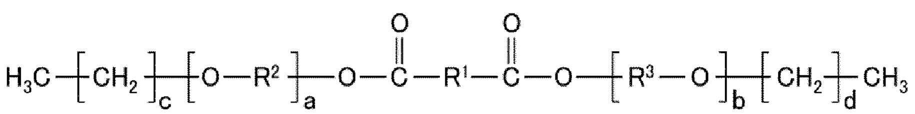

Formula (2)

(in the formula, $R^1$ is an alkylene group which has 4 carbon atoms, "a" and "b" are respectively independently integers of 4 to 5, "c" and "d" are respectively independently integers of 0 to 4, and $R^2$ and $R^3$ are respectively independently alkylene groups which have 2 carbon atoms.)

3. The nitrile copolymer rubber composition as set forth in claim 1 or 2, wherein a content of said vinyl chloride resin (B) is 1 to 150 parts by weight and a content of said plasticizer (C) is 1 to 200 parts by weight with respect to 100 parts by weight of said nitrile copolymer rubber (A).

4. The nitrile copolymer rubber composition as set forth in any one of claims 1 to 3, wherein the ratio of content of said cationic monomer units (a3) in said nitrile copolymer rubber (A) is 0.1 to 20 wt%.

5. The nitrile copolymer rubber composition as set forth in any one of claims 1 to 4, wherein the ratio of content of said aromatic vinyl monomer units (a4) in said nitrile copolymer rubber (A) is 1 to 30 wt%.

6. The nitrile copolymer rubber composition as set forth in any one of claims 1 to 5, wherein said nitrile copolymer rubber (A) contains methyl ethyl ketone insolubles in 0.5 to 90 wt%.

7. The nitrile copolymer rubber composition as set forth in any one of claims 1 to 6, further contains a layered inorganic

filler (D) with an aspect ratio of 30 to 2,000 in 1 to 100 parts by weight with respect to 100 parts by weight of said nitrile copolymer rubber (A).

8. A cross-linkable nitrile rubber composition which contains the nitrile copolymer rubber composition as set forth in any one of claims 1 to 7 and a cross-linking agent.

9. A cross-linked rubber obtained by cross-linking the cross-linkable nitrile rubber composition as set forth in claim 8.

10. A hose obtained by shaping the cross-linkable nitrile rubber composition as set forth in claim 8 into a tube, inserting a mandrel to obtain a shaped member, and cross-linking the shaped member.

## Patentansprüche

1. Nitrilcopolymerkautschukzusammensetzung, enthaltend:

   einen Nitrilcopolymerkautschuk (A), welcher α,β-ethylenisch ungesättigte Nitrilmonomereinheiten (a1) zu 35 bis 85 Gew.-%, konjugierte Dienmonomereinheiten (a2), die wenigstens teilweise hydriert sein können, zu 15 bis 65 Gew.-%, kationische Monomereinheiten (a3) zu 0 bis 30 Gew.-% und aromatische Vinylmonomereinheiten (a4) zu 0 bis 50 Gew.-% enthält, wobei der Gesamtgehalt der α,β-ethylenisch ungesättigten Nitrilmonomereinheiten (a1) und der aromatischen Vinylmonomereinheiten (a4) 35 bis 85 Gew.-% beträgt,
   ein Vinylchloridharz (B) sowie
   einen Weichmacher (C), der durch die folgende allgemeine Formel (1) ausgedrückt wird:

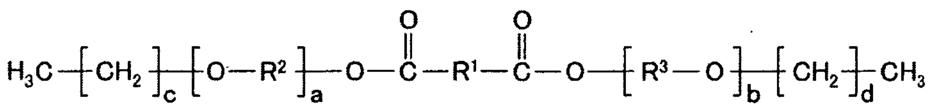

Formel (1)

   (in der Formel ist $R^1$ eine Alkylengruppe, welche 1 bis 8 Kohlenstoffatome aufweist, "a" und "b" sind jeweils unabhängig ganze Zahlen von 3 bis 11, "c" und "d" sind jeweils unabhängig ganze Zahlen von 0 bis 8, und $R^2$ und $R^3$ sind jeweils unabhängig Alkylengruppen, welche 1 bis 6 Kohlenstoffatome aufweisen.)

2. Nitrilcopolymerkautschukzusammensetzung gemäß Anspruch 1, wobei der Weichmacher (C) ein durch die folgende allgemeine Formel (2) ausgedrückter Weichmacher ist:

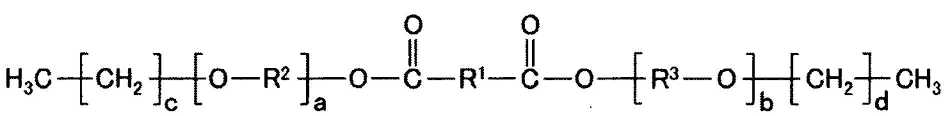

Formel (2)

   (in der Formel ist $R^1$ eine Alkylengruppe, die 4 Kohlenstoffatome aufweist, "a" und "b" sind jeweils unabhängig ganze Zahlen von 4 bis 5, "c" und "d" sind jeweils unabhängig ganze Zahlen von 0 bis 4, und $R^2$ und $R^3$ sind jeweils unabhängig Alkylengruppen, welche 2 Kohlenstoffatome aufweisen.)

3. Nitrilcopolymerkautschukzusammensetzung gemäß Anspruch 1 oder 2, wobei der Gehalt des Vinylchloridharzes (B) 1 bis 150 Gewichtsteile beträgt und der Gehalt des Weichmachers (C) 1 bis 200 Gewichtsteile bezüglich 100 Gewichtsteilen des Nitrilcopolymerkautschuks (A) beträgt.

4. Nitrilcopolymerkautschukzusammensetzung gemäß einem der Ansprüche 1 bis 3, wobei das Verhältnis des Gehalts der kationischen Monomereinheiten (a3) im Nitrilcopolymerkautschuk (A) 0,1 bis 20 Gew.-% beträgt.

5. Nitrilcopolymerkautschukzusammensetzung gemäß einem der Ansprüche 1 bis 4, wobei das Verhältnis des Gehalts der aromatischen Vinylmonomereinheiten (a4) im Nitrilcopolymerkautschuk (A) 1 bis 30 Gew.-% beträgt.

6. Nitrilcopolymerkautschukzusammensetzung gemäß einem der Ansprüche 1 bis 5, wobei der Nitrilcopolymerkautschuk (A) in Methylethylketon unlösliche Stoffe zu 0,5 bis 90 Gew.-% enthält.

7. Nitrilcopolymerkautschukzusammensetzung gemäß einem der Ansprüche 1 bis 6, welche des Weiteren einen schichtartigen anorganischen Füllstoff (D) mit einem Dimensionsverhältnis von 30 bis 2.000 zu 1 bis 100 Teilen nach Gewicht bezüglich 100 Teilen nach Gewicht des Nitrilcopolymerkautschuks (A) enthält.

8. Vernetzbare Nitrilkautschukzusammensetzung, welche die Nitrilcopolymerkautschukzusammensetzung gemäß einem der Ansprüche 1 bis 7 und ein Vernetzungsmittel enthält.

9. Vernetzter Kautschuk, erhalten durch Vernetzen der vernetzbaren Nitrilkautschukzusammensetzung gemäß Anspruch 8.

10. Schlauch, erhalten durch Formen der vernetzbaren Nitrilkautschukzusammensetzung gemäß Anspruch 8 zu einem Schlauch, Einsetzen eines Dorns unter Erhalt eines geformten Teils und Vernetzen des geformten Teils.

## Revendications

1. Composition de caoutchouc de copolymère de nitrile contenant
un caoutchouc de copolymère de nitrile (A) qui contient des motifs de monomère de nitrile $\alpha,\beta$-éthyléniquement insaturé (a1) à 35 à 85 % en poids, des motifs de monomère de diène conjugué qui peuvent être au moins partiellement hydrogénés (a2) à 15 à 65 % en poids, des motifs de monomère cationique (a3) à 0 à 30 % en poids, et des motifs de monomère vinyle aromatique (a4) à 0 à 50 % en poids, la teneur totale en lesdits motifs de monomère de nitrile $\alpha,\beta$-éthyléniquement insaturé (a1) et lesdits motifs de monomère vinyle aromatique (a4) étant de 35 à 85 % en poids,
une résine de chlorure de vinyle (B), et
un plastifiant (C) qui est exprimé par la formule générale (1) suivante,

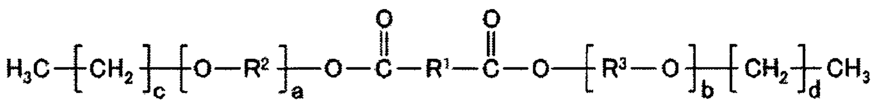

Formule (1)

(dans la formule, $R^1$ est un groupe alkylène qui comporte 1 à 8 atomes de carbone, « a » et « b » sont respectivement indépendamment des entiers de 3 à 11, « c » et « d » sont respectivement indépendamment des entiers de 0 à 8, et $R^2$ et $R^3$ sont respectivement indépendamment des groupes alkylène qui comportent 1 à 6 atomes de carbone).

2. Composition de caoutchouc de copolymère de nitrile selon la revendication 1, dans laquelle ledit plastifiant (C) est un qui est exprimé par la formule générale (2) suivante

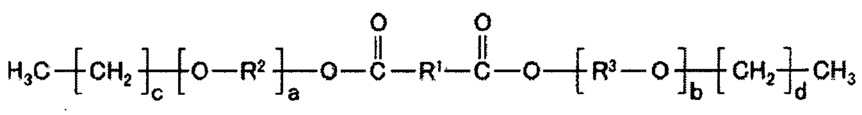

Formule (2)

(dans la formule, $R^1$ est un groupe alkylène qui comporte 4 atomes de carbone, « a » et « b » sont respectivement indépendamment des entiers de 4 à 5, « c » et « d » sont respectivement indépendamment des entiers de 0 à 4, et $R^2$ et $R^3$ sont respectivement indépendamment des groupes alkylène qui comporte 2 atomes de carbone).

3. Composition de caoutchouc de copolymère de nitrile selon la revendication 1 ou 2, dans laquelle une teneur en ladite résine de chlorure de vinyle (B) est de 1 à 150 parties en poids et une teneur en ledit plastifiant (C) est de 1 à 200 parties en poids par rapport à 100 parties en poids dudit caoutchouc de copolymère de nitrile (A).

4. Composition de caoutchouc de copolymère de nitrile selon l'une quelconque des revendications 1 à 3, dans laquelle le rapport de la teneur en lesdits motifs de monomère cationique (a3) dans ledit caoutchouc de copolymère de nitrile (A) est de 0,1 à 20 % en poids.

**5.** Composition de caoutchouc de copolymère de nitrile selon l'une quelconque des revendications 1 à 4, dans laquelle le rapport de la teneur en lesdits motifs de monomère de vinyle aromatique (a4) dans ledit caoutchouc de copolymère de nitrile (A) est de 1 à 30 % en poids.

**6.** Composition de caoutchouc de copolymère de nitrile selon l'une quelconque des revendications 1 à 5, dans laquelle ledit caoutchouc de copolymère de nitrile (A) contient des matières insolubles de méthyléthylcétone dans 0,5 à 90 % en poids.

**7.** Composition de caoutchouc de copolymère de nitrile selon l'une quelconque des revendications 1 à 6, qui contient en outre une charge inorganique en couches (D) ayant un rapport de côté de 30 à 2 000 dans 1 à 100 parties en poids par rapport à 100 parties en poids dudit caoutchouc de copolymère de nitrile (A).

**8.** Composition de caoutchouc de nitrile réticulable qui contient la composition de caoutchouc de copolymère de nitrile selon l'une quelconque des revendications 1 à 7 et un agent de réticulation.

**9.** Caoutchouc réticulé obtenu par la réticulation de la composition de caoutchouc de nitrile réticulable selon la revendication 8.

**10.** Tuyau souple obtenu en façonnant la composition de caoutchouc de nitrile réticulable selon la revendication 8 en un tube, en insérant un mandrin pour obtenir un organe façonné, et en réticulant l'organe façonné.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007277341 A
- WO 2009096456 A1
- WO 2011016479 A1
- JP 2011012132 A
- JP H02158639 A
- JP 53010645 A
- JP H07149990 A
- JP 56120735 A